(19) Europäisches Patentamt
European Patent Office
Office européen des brevets

(11) **EP 2 212 587 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(51) Int Cl.:
***F16H 45/02*** *(2006.01)*

(21) Anmeldenummer: **08855571.9**

(22) Anmeldetag: **17.11.2008**

(86) Internationale Anmeldenummer:
**PCT/EP2008/065644**

(87) Internationale Veröffentlichungsnummer:
**WO 2009/068453 (04.06.2009 Gazette 2009/23)**

(54) **HYDRODYNAMISCHE KOPPLUNGSEINRICHTUNG**

HYDRODYNAMIC COUPLER

DISPOSITIF D'ACCOUPLEMENT HYDRODYNAMIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.11.2007 DE 102007057431**

(43) Veröffentlichungstag der Anmeldung:
**04.08.2010 Patentblatt 2010/31**

(73) Patentinhaber: **ZF Friedrichshafen AG 88046 Friedrichshafen (DE)**

(72) Erfinder:
• **FELDHAUS, Reinhard 97502 Euerbach (DE)**
• **SASSE, Christoph 97422 Schweinfurt (DE)**
• **WACK, Erwin 97464 Niederwerrn (DE)**

(56) Entgegenhaltungen:
**FR-A- 2 472 693 FR-A- 2 895 770 JP-A- 63 101 537**

## Beschreibung

## Technisches Gebiet

Die vorliegende Erfindung betrifft eine hydrodynamische Kopplungseinrichtung, insbesondere Drehmomentwandler mit den Merkmalen des Oberbegriffs von Anspruch 1, umfassend ein Gehäuse mit einem Pumpenrad, ein in einem Innenraum des Gehäuses angeordnetes Turbinenrad und eine Überbrückungskupplungsanordnung mit einer ersten Reibflächenformation, die mit dem Gehäuse zur gemeinsamen Drehung um eine Drehachse verbunden ist, einer zweiten Reibflächenformation, die mit dem Turbinenrad zur gemeinsamen Drehung verbunden ist, und einem Kolbenelement, wobei die zweite Reibflächenformation über eine Torsionsdämpferanordnung mit einer Turbinenradnabe des Turbinenrads gekoppelt ist, wobei die Torsionsdämpferanordnung einen ersten Torsionsschwingungsdämpferbereich mit einem mit der zweiten Reibflächenformation verbundenen ersten Eingangsbereich und einem über eine Mehrzahl erster Dämpferfedereinheiten mit dem ersten Eingangsbereich gekoppelten ersten Ausgangsbereich sowie einen zweiten Torsionsschwingungsdämpferbereich mit einem mit dem ersten Ausgangsbereich verbundenen zweiten Eingangsbereich und einem über eine Mehrzahl zweiter Dämpferfedereinheiten mit dem zweiten Eingangsbereich gekoppelten zweiten Ausgangsbereich umfasst, wobei eine Baugruppe von erstem Eingangsbereich und erstem Ausgangsbereich eine die ersten Dämpferfedereinheiten radial außen wenigstens bereichsweise umgebende Abschlussfläche bereitstellt.

## Stand der Technik

Eine hydrodynamische Kopplungseinrichtung in Form eines Drehmomentwandlers, wie sie vor allem hinsichtlich des Aufbaus der Torsionsdämpferanordnung auch aus der DE 103 17 634 A1 bekannt ist, wird nachfolgend mit Bezug auf die Fig. 1 und 1a beschrieben.

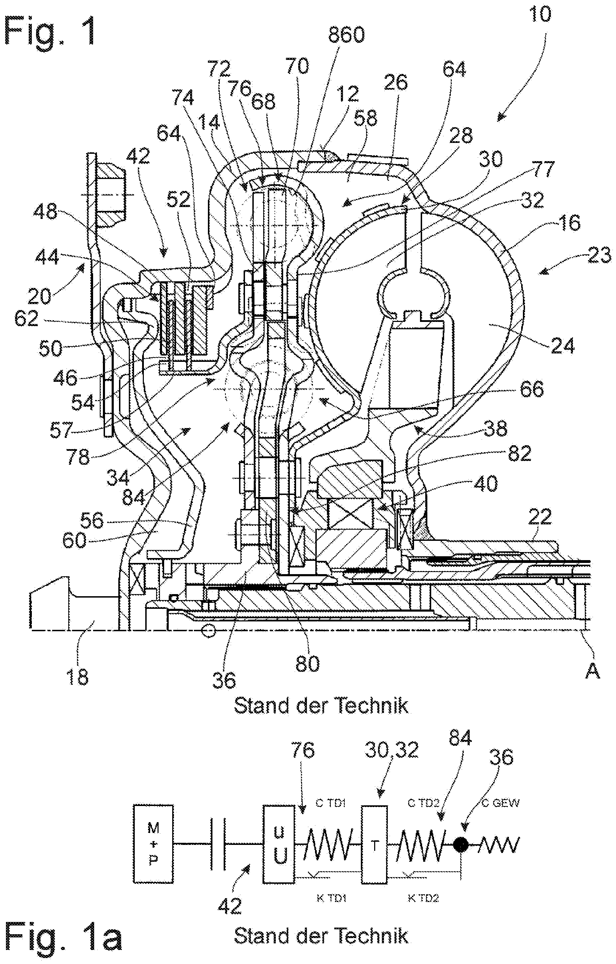

In Fig. 1 ist ein hydrodynamischer Drehmomentwandler allgemein mit 10 bezeichnet. Der Drehmomentwandler 10 umfasst ein Wandlergehäuse 12, das zwei Gehäuseschalen 14, 16 umfasst. Diese sind radial außen beispielsweise durch Verschweißung fest verbunden. Die Gehäuseschale 14 weist in ihrem radial inneren Bereich einen Lagerzapfen 18 auf, der in einer Aussparung einer über eine Kopplungsanordnung 20 und eine Flexplatte o. dgl. zur Drehung um eine Drehachse A anzukoppelnden Antriebswelle, beispielsweise Kurbelwelle, gelagert werden kann.

Die Gehäuseschale 16 bildet eine Pumpenradschale eines Pumpenrads 23, die in ihrem radial inneren Endbereich mit einer Pumpennabe 22 zum Antrieb einer in einem Getriebe vorgesehenen Ölpumpe verbunden ist und an ihrer Innenseite eine Mehrzahl von um die Drehachse A aufeinander folgend angeordneten Pumpenradschaufeln 24 trägt.

In einem Innenraum 26 des Wandlergehäuses 12 ist ein Turbinenrad 28 vorgesehen. Dieses weist eine Turbinenradschale 30 und eine Mehrzahl von um die Drehachse A aufeinander folgend daran vorgesehenen Turbinenradschaufeln 32 auf. Das Turbinenrad 28 ist im dargestellten Beispiel über eine Torsionsdämpferanordnung 34 mit einer Turbinenradnabe 36 zur Drehung gekoppelt. Über diese Turbinenradnabe 36 ist der hydrodynamische Drehmomentwandler 10 mit einer Abtriebswelle, beispielsweise einer Getriebeeingangswelle, drehgekoppelt.

Zwischen dem Turbinenrad 28 und dem Pumpenrad 23 ist ein allgemein mit 38 bezeichnetes Leitrad vorgesehen. Dieses ist über eine Freilaufanordnung 40 auf einer nicht dargestellten Stützhohlwelle getragen und somit nur in einer Richtung um diese Drehachse A drehbar, um eine Momentenabstützfunktionalität zu erreichen.

Eine Überbrückungskupplungsanordnung 42 umfasst zwei Reibflächenformationen 44, 46. Jede dieser Reibflächenformationen 44, 46 weist eine Mehrzahl von Reiblamellen bzw. Reibelementen 48, 50 auf. Die Reibelemente 48 der Reibflächenformation 44 sind mit einer an der Gehäuseschale 14 gebildeten Verzahnung 52 in Drehkopplungseingriff. Die Reibelemente 50 der Reibflächenformation 46 sind mit einer Verzahnung 54 an einem Reibelemententräger 57 in Drehkopplungseingriff.

Dieser Reibelemententräger 57 wiederum ist über die Torsionsdämpferanordnung 34 mit dem Turbinenrad 28 bzw. der Turbinenradnabe 36 zur Drehmomentübertragung gekoppelt. Die beiden Verzahnungen 52, 54 sind im Wesentlichen in axialer Richtung langgestreckt, um eine Axialbewegbarkeit der Reibelemente 48, 50 zu gewährleisten.

Ein Kolben 56 ist an der Gehäuseschale 14 axial bewegbar geführt und radial innen und radial außen durch entsprechende Dichtungselemente fluiddicht abgeschlossen. Der Kolben 56 unterteilt den Innenraum 26 des Wandlergehäuses 12 in einen ersten Raumbereich 58, welcher auch das Turbinenrad 28, das Leitrad 38 sowie die Reibflächenformationen 44, 46 enthält, und einen zweiten Raumbereich 60, welcher im Wesentlichen zwischen dem Kolben 56 und der Gehäuseschale 14 begrenzt ist. In seinem radial äußeren Bereich weist der Kolben 56 einen Beaufschlagungsbereich 62 auf, mit welchem er bei Verschiebung in Richtung Einrücken die Reibflächenformationen 44, 46 gegeneinander presst und somit in Reibeingriff bringt. Ein am Gehäusedeckel 14 vorgesehener Sicherungsring 64 sorgt für eine axiale Abstützung.

Die Bewegung des Kolbens 56 in Richtung Einrücken, also mit seinem Beaufschlagungsbereich 62 auf die Reibflächenformationen 44, 46 zu, wird durch die Zufuhr von Fluid in den zweiten Raumbereich 60 erlangt. Durch die Variation des Fluiddrucks im zweiten Raumbereich 60 im Vergleich zum Fluiddruck im ersten Raumbereich 58 kann die Lage des Kolbenelements 56 und somit der Drehmomentübertragungszustand der Überbrückungskupplungsanordnung 42 beeinflusst werden.

Die Torsionsdämpferanordnung 34 umfasst zwei Torsionsschwingungsdämpferbereiche 64, 66. Ein erster Eingangsbereich 68 des radial äußeren ersten Torsionsschwingungsdämpferbereichs 64 umfasst ein Zentralscheibenelement 70, das durch einen bzw. durch mehrere Nietbolzen mit dem Reibelemententräger 57 fest verbunden ist. Ein erster Ausgangsbereich 72 des ersten Torsionsschwingungsdämpferbereichs 64 umfasst den radial äußeren Bereich zweier Deckscheibenelemente 74, 77, die beidseits des Zentralscheibenelements 70 angeordnet sind und miteinander beispielsweise durch mehrere das Zentralscheibenelement 70 auch mit Umfangsbewegungsspiel durchsetzende Nietbolzen miteinander fest verbunden sind. Über eine Mehrzahl erster Dämpferfedereinheiten 76 sind der erste Eingangsbereich 68 und der erste Ausgangsbereich 72 zur Drehmomentübertragung miteinander gekoppelt, auf Grund der Federelastizität der ersten Dämpferfedereinheiten 76 jedoch bezüglich einander um die Drehachse A drehbar. Es sei darauf hingewiesen, dass selbstverständlich das Zentralscheibenelement 70 und die Deckscheibenelemente 74, 77 für die ersten Dämpferfedereinheiten 76 jeweilige Umfangsabstützbereiche aufweisen, um ein Drehmoment aufnehmen bzw. weiterleiten zu können.

Der radial innen liegende zweite Torsionsschwingungsdämpferbereich 66 umfasst als zweiten Eingangsbereich 78 den radial inneren Bereich der beiden Deckscheibenelemente 74, 77, so dass durch integrale Ausgestaltung an den jeweiligen Deckscheibenelementen 74, 77 der erste Ausgangsbereich 72 und der zweite Eingangsbereich 78 miteinander verbunden sind. Ein weiteres Zentralscheibenelement 80 bildet im Wesentlichen den zweiten Ausgangsbereich 82 des zweiten Torsionsschwingungsdämpferbereichs 66. Dieser zweite Ausgangsbereich 82 ist radial innen durch Verschweißung mit der Turbinenradnabe 36 fest verbunden. Ferner sind radial innen die beiden Deckscheibenelemente 74, 77 miteinander und der Turbinenradschale 30 fest verbunden, so dass die Turbinenradschale 30 des Turbinenrads 28 mit dem zweiten Eingangsbereich 78 und mithin dem ersten Ausgangsbereich 72 fest verbunden ist.

Eine Mehrzahl zweiter Dämpferfedereinheiten 84, die, ähnlich wie die ersten Dämpferfedereinheiten 76, ebenfalls in Umfangsrichtung aufeinander folgend um die Drehachse A herum angeordnet sind, stellt eine Kopplung zwischen dem zweiten Eingangsbereich 78, also den radial innen liegenden Bereichen der Deckscheibenelemente 74, 77, und dem zweiten Ausgangsbereich 82, also dem zweiten Zentralscheibenelement 80 her. Auch hier weisen die jeweiligen Eingangs- bzw. Ausgangsbereiche Umfangsabstützbereiche für die zweiten Dämpferfedereinheiten 84 auf.

Ausgangsbereiche Umfangsabstützbereiche für die zweiten Dämpferfedereinheiten 84 auf.

Zu den ersten Dämpferfedereinheiten 76 bzw.

den zweiten Dämpferfedereinheiten 84 sei ausgeführt, dass diese im Allgemeinen mit Schraubendruckfedern ausgebildet sind, die beispielsweise in Umfangsrichtung gekrümmt verlaufend angeordnet sind. Je nach erforderlicher Dämpfungscharakteristik, können beispielsweise bei jedem der Torsionsschwingungsdämpferbereiche 64, 66 in Umfangsrichtung aufeinander folgend zwei derartige Dämpferfedereinheiten 76, 84 vorgesehen sein, die näherungsweise über einen Winkelbereich 180° langgestreckt sind. Wie bereits ausgeführt, können die Dämpferfedereinheiten 76, 84 eine Schraubendruckfeder umfassen, können jedoch auch mit mehreren in Umfangsrichtung aufeinander folgenden und näherungsweise tangential sich erstreckenden und in Umfangsendbereichen aneinander abgestützten Schraubendruckfedern ausgebildet sein. Auch können, wie dies in der Fig. 1 anhand der Dämpferfedereinheiten 84 des radial innen liegenden zweiten Torsionsschwingungsdämpferbereichs 66 veranschaulicht ist, die Dämpferfedereinheiten ineinander geschachtelte Schraubendruckfedern umfassen, die durch unterschiedliche Längenausgestaltung abhängig vom Relativdrehwinkel zwischen einem jeweiligen Eingangsbereich und einem Ausgangsbereich gestuft wirksam werden können.

Bei der in Fig. 1 dargestellten Torsionsdämpferanordnung 34 ist also der radial äußere erste Torsionsschwingungsdämpferbereich 64 dann wirksam, wenn ein Drehmoment über die Überbrückungskupplungsanordnung 42 übertragen wird. Das Drehmoment wird dann über den ersten Eingangsbereich 68 und über die ersten Dämpferfedereinheiten 76 auf den ersten Ausgangsbereich 72 übertragen. Von diesem bzw. dem damit fest verbunden ausgebildeten zweiten Eingangsbereich 78 gelangt das Drehmoment über die zweiten Dämpferfedereinheiten 84 und den zweiten Ausgangsbereich 82 zur Turbinenradnabe 36. Die beiden Torsionsschwingungsdämpferbereiche 64, 66 sind also seriell wirksam.

Bei ausgerückt gehaltener Überbrückungskupplungsanordnung 42 und Drehmomentübertragung bzw. Verstärkung über den Fluidkreislauf, der zwischen dem Turbinenrad 28 und dem Pumpenrad 23 bzw. dem Leitrad 38 umgewälzt wird, wird das Drehmoment über die Turbinenradschale 30 in den ersten Ausgangsbereich 72 bzw. den zweiten Eingangsbereich 78 eingeleitet und mithin über die zweiten Dämpferfedereinheiten 84 und den zweiten Ausgangsbereich 82 auf die Turbinenradnabe 36 übertragen.

Die Fig. 1a zeigt in blockbildartiger Darstellung den Aufbau einer derartigen als Drehmomentwandler ausgebildeten Kopplungseinrichtung 10. Man erkennt in einem ersten Block M+P die Masse des Motors bzw. der rotierenden Kurbelwelle desselben sowie des Gehäuses 12 bzw. aller damit fest verbundenen Baugruppen, insbesondere auch des Pumpenrads 23. Über die Überbrückungskupplungsanordnung 42 sind die mit einem Block Ü veranschaulichten Massebereiche der Überbrückungskupplung 42 einerseits und des ersten Eingangsbereichs 68 des ersten Torsionsschwingungsdämpferbereichs 64 andererseits veranschaulicht. Über den ersten Torsionsschwingungsdämpferbereich 64, welcher durch eine Feder mit der Federkonstante CTD1 veranschaulicht ist, ist die Turbinenradschale 30 mit allen damit fest verbundenen Baugruppen, insbesondere auch dem ersten Ausgangsbereich 72 und dem zweiten Eingangsbereich 78, in den Drehmomentenfluss eingekoppelt, wobei zwischen dem Block Ü und dem Block T neben der durch die ersten Dämpferfedereinheiten 76 bereitgestellten Federkraft bzw. Federkonstante CTD1 auch eine coulombsche Reibung KTD1 wirkt. Diese wird erzeugt durch die verschiedenen im Drehmomentdämpfungsbetrieb bezüglich einander sich bewegenden und damit aneinander reibenden Bauteile, was insbesondere auch für die ersten Dämpferfedereinheiten 76 zutrifft, die unter Fliehkrafteinwirkung sich nach radial außen hin gegen eine Abschlussfläche 860 am Deckscheibenelement 77 anlegen wird.

Zwischen dem mit T gekennzeichneten Block und der Turbinenradnabe 36 wirken die zweiten Dämpferfedereinheiten 84 mit ihrer Federkonstante CTD2. Weiterhin wird zwischen dem Block T und der Turbinenradnabe 36 ebenfalls coulombsche Reibung KTD2 erzeugt. Im Drehmomentenfluss folgt dann eine nicht weiter dargestellte Getriebeeingangswelle, die selbstverständlich auch eine gewisse Elastizität, insbesondere Torsionselastizität aufweist.

Eine grundlegende Problematik derartiger hydrodynamischer Kopplungseinrichtungen bzw. der darin vorgesehenen Torsionsdämpferanordnungen ist die Entkopplungsgüte insbesondere zwischen dem Wandlergehäuse und einem Abtriebsbereich, also der Turbinenradnabe bzw. einer damit drehfest gekoppelten Getriebeeingangswelle. Obgleich durch das Vorsehen zweier seriell wirkender Torsionsschwingungsdämpferbereiche bereits eine deutliche Verbesserung gegenüber Ausgestaltungsformen mit nur einem Torsionsschwingungsdämpferbereich, beispielsweise im Drehmomentenfluss zwischen einer Turbinenradschale und der Turbinenradnabe, erzielt wird, kann mit einer derartigen Anordnung nicht für alle Betriebszustände eine ausreichende Entkopplungsgüte erzielt werden. Die Entkopplungsgüte hängt von verschiedenen Parametern, insbesondere der Lage der Eigenfrequenz ab, die idealerweise deutlich unter demjenigen Drehzahlbereich sein sollte, in welchem eine Brennkraftmaschine als Antriebsaggregat normalerweise betrieben wird. Die Eigenfrequenz eines derartigen Schwingungssystems hängt im Wesentlichen von den primärseitigen und sekundärseitigen Massenträgheiten und der Steifigkeit bzw. den Steifigkeiten der Dämpferfedereinheiten ab. Eine Erhöhung der Massenträgheiten, die sich auf die Lage der Eigenfrequenz positiv auswirken würde, ist auf Grund des begrenzten Bauraums sowie auf Grund des oftmals nachteilhaften Einflusses auf die Fahrdynamik nur in wenigen Ausnahmen möglich. Eine weitere Möglichkeit, die Eigenfrequenz zu senken, involviert die Absenkung der Federsteifigkeiten insbesondere des radial inneren, zweiten Torsionsschwingungsdämpferbereichs. Auch die hier möglichen Variationsbereiche führen jedoch nicht zu einer eine ausreichende Erhöhung der Entkopplungsgüte sicherstellenden Absenkung der Steifigkeit.

Ein weiteres Problem besteht darin, dass im Rotationsbetrieb die auf die verschiedenen Komponenten einer derartigen Einrichtung einwirkenden Fliehkräfte vor allem dafür sorgen, dass die ersten Dämpferfedereinheiten des radial äußeren ersten Torsionsschwingungsdämpferbereichs vergleichsweise stark nach radial außen belastet werden und somit entsprechend stark gegen die diese radial außen umgebende Abschlussfläche gepresst werden. Dies führt auf Grund der dabei entstehenden Reibkräfte zu einer Beeinträchtigung der Entkopplungsgüte und hat zur Folge, dass die ersten Dämpferfedereinheiten nicht mit ihrem gesamten Federvolumen effektiv genutzt werden können. Im Extremfall kann dies so weit führen, dass die ersten Dämpferfedereinheiten auf Grund der reibungsmäßigen Begrenzung nicht mehr auf das volle Drehmoment ausgelegt werden können und nur einen Teilbereich des Motordrehmoments abdecken können. Vor allem bei hohen zu übertragenden Drehmomenten bzw. hohen Lasten wird also dieser radial äußere Torsionsschwingungsdämpferbereich im Wesentlichen überbrückt. Eine schwingungsentkoppelnde Funktionalität kann dann im Wesentlichen nur noch der weiter radial innen liegende zweite Torsionsschwingungsdämpferbereich mit seinen zweiten Dämpferfedereinheiten bereitstellen. Dieses Problem tritt vor allem dann stärker in den Vordergrund, wenn zum Bereitstellen eines größeren Federvolumens insbesondere im ersten Torsionsschwingungsdämpferbereich dieser vergleichsweise weit nach radial außen verlagert wird, um eine große Umfangserstreckungslänge der ersten Dämpferfedereinheiten bereitstellen zu können. Je weiter jedoch dieser erste Torsionsschwingungsdämpferbereich bzw. dessen erste Dämpferfedereinheiten nach radial außen verlagert sind, desto stärker wird der Fliehkrafteinfluss auf diese sein und sich die fliehkraftbedingten Reibeffekte entsprechend verstärken, so dass ein möglicherweise erzielbarer Gewinn an Federvolumen entsprechende Nachteile bei der Schwingungsentkopplung durch eine stärkere coulombsche Reibwechselwirkung mit sich bringt.

Eine hydrodynamische Kopplungseinrichtung mit den Merkmalen von Anspruch 1 ist bekannt aus der FR 2472693 A.

**Darstellung der Erfindung**

Es ist die Aufgabe der vorliegenden Erfindung, eine verbesserte hydrodynamische Kopplungseinrichtung bereitzustellen.

Erfindungsgemäß wird diese Aufgabe gelöst durch eine hydrodynamische Kopplungseinrichtung, insbesondere Drehmomentwandler, mit den Merkmalen von Anspruch 1, umfassend ein Gehäuse mit einem Pumpenrad, ein in einem Innenraum des Gehäuses angeordnetes Turbinenrad und eine Überbrückungskupplungsanordnung mit einer ersten Reibflächenformation, die mit dem Gehäuse zur gemeinsamen Drehung um eine Drehachse verbunden ist, einer zweiten Reibflächenformation, die mit dem Turbinenrad zur gemeinsamen Drehung verbunden ist, und einem Kolbenelement, wobei die zweite Reibflächenformation über eine Torsionsdämpferanordnung mit einer Turbinenradnabe des Turbinenrads gekoppelt ist, wobei die Torsionsdämpferanordnung einen ersten Torsionsschwingungsdämpferbereich mit einem mit der zweiten Reibflächenformation verbundenen ersten Eingangsbereich und einen über eine Mehrzahl erster Dämpferfedereinheiten mit dem ersten Eingangsbereich gekoppelten ersten Ausgangsbereich sowie einen zweiten Torsionsschwingungsdämpferbereich mit einem mit dem ersten Ausgangsbereich verbundenen zweiten Eingangsbereich und einen über eine Mehrzahl zweiter Dämpferfedereinheiten mit dem zweiten Eingangsbereich gekoppelten zweiten Ausgangsbereich umfasst, wobei weiter vorgesehen ist, dass der erste Ausgangsbereich mit dem zweiten Eingangsbereich über einen dritten Torsionsschwingungsdämpferbereich verbunden ist, und dass eine Baugruppe von erstem Eingangsbereich und erstem Ausgangsbereich eine die ersten Dämpferfedereinheiten radial außen wenigstens bereichsweise umgebende Abschlussfläche bereitstellt und wenigstens eine erste Dämpferfedereinheit wenigstens teilweise bezüglich der Abschlussfläche reibungsentkoppelt oder reibungsmindernd geführt ist.

Durch die zumindest teilweise reibungsmäßige Entkopplung zumindest einer ersten Dämpferfedereinheit bezüglich der Abschlussfläche oder der reibungsmindernden Wechselwirkung zwischen diesen Baugruppen wird dafür gesorgt, dass auch bei vergleichsweise großen Drehzahlen und entsprechend hohen Fliehkraftbelastungen der ersten Dämpferfedereinheiten nach radial außen diese grundsätzlich noch ihre durch Kompression derselben eingeführte schwingungsentkoppelnde Funktionalität erfüllen können. Das Eingliedern eines bzw. ggf. mehrerer zusätzlicher Torsionsschwingungsdämpferbereiche in den Drehmomentübertragungsweg zwischen einem Wandlergehäuse und einer Turbinenradnabe bzw. auch zwischen eine Turbinenradschale und eine Turbinenradnabe erzielt eine deutliche Verbesserung der Entkopplungsqualität.

Somit wird es also möglich, einerseits durch Vergrößerung des Federvolumens eine entsprechende Schwingungsdämpfungskapazität bei hinsichtlich der auftretenden Belastungen optimierter Federkonstante bereitzustellen, wobei andererseits der zur Verfügung stehende Bauraum auch nach radial außen hin optimiert genutzt werden kann, da auch bzw. insbesondere radial weiter außen angeordnete Dämpferelementeneinheiten, die stärkeren Fliehkräften ausgesetzt sind, nicht durch übermäßig starke Reibwechselwirkung mit einer Abschlussfläche oder dergleichen die Entkopplungsqualität beeinträchtigen.

Dabei ist erfindungsgemäß vorgesehen, dass der erste Ausgangsbereich mit dem zweiten Eingangsbereich über einen dritten Torsionsschwingungsdämpferbereich verbunden ist.

Für die Einbeziehung der Turbinnenradschale in die Staffelung der verschiedenen seriell wirksamen Torsionsschwingungsdämpferbereiche ist erfindungsgemäß die Turbinenradschale mit dem dritten Eingangsbereich oder dem dritten Ausgangsbereich verbunden. Dies bedeutet, dass auch im Drehmomentübertragungsweg zwischen der Turbinenradschale und der Turbinenradnabe je nach Anbindung der Turbinenradschale ein oder zwei Torsionsschwingungsdämpferbereiche wirksam sein können.

Der dritte Ausgangsbereich kann mit dem zweiten Eingangsbereich verbunden sein. Diese Verbindung kann direkt, also durch mechanisch steife Verbindung erfolgen. Alternativ kann vorgesehen sein, dass der dritte Ausgangsbereich mit dem zweiten Eingangsbereich über einen vierten Torsionsschwingungsdämpferbereich verbunden ist.

Auch für diesen weiteren, vierten Torsionsschwingungsdämpferbereich kann vorgesehen sein, dass er einen mit dem dritten Ausgangsbereich verbundenen vierten Eingangsbereich und einen über eine Mehrzahl vierter Dämpferfedereinheiten mit dem vierten Eingangsbereich gekoppelten vierten Ausgangsbereich umfasst.

Um den in einer hydrodynamischen Kopplungseinrichtung allgemein sehr begrenzten Bauraum möglichst effizient zu nutzen, wird weiter vorgeschlagen, dass wenigstens ein Torsionsschwingungsdämpferbereich in einem von dem Turbinenrad und dem Pumpenrad umgebenen Ringraum angeordnet ist. Der in den Ringraum eingegliederte Torsionsschwingungsdämpferbereich kann dabei der dritte oder vierte Torsionsschwingungsdämpferbereich sein, so dass sichergestellt ist, dass der erste Torsionsschwingungsdämpferbereich und der zweite Torsionsschwingungsdämpferbereich, welche die unmittelbare Anknüpfung an das Gehäuse einerseits und die Turbinenradnabe andererseits sicherstellen, sehr einfach an diese Baugruppen angebunden werden können.

Gemäß einem bevorzugten Ausführungsbeispiel kann vorgesehen sein, dass wenigstens ein Torsionsschwingungsdämpferbereich wenigstens zwei Torsionsschwingungsdämpfereinheiten aufweist.

Durch das Vorsehen mehrerer Torsionsschwingungsdämpfereinheiten in einem Torsionsschwingungsdämpferbereich, welche Torsionsschwingungsdämpfereinheiten dann im Wesentlichen parallel wirken, wird ein weiterer erheblicher Einfluss auf die Dämpfungscharakteristik möglich.

Dabei kann beispielsweise vorgesehen sein, dass die wenigstens zwei Torsionsschwingungsdämpfereinheiten eines Torsionsschwingungsdämpferbereichs axial aufeinander folgend angeordnet sind, was auf Grund der parallelen Wirksamkeit der Torsionsschwingungsdämpfereinheiten eine leichte Kombination derselben ermöglicht.

Weiter wird vorgeschlagen, dass jede Torsionsschwingungsdämpfereinheit eines Torsionsschwingungsdämpferbereichs eine Mehrzahl von Dämpferfedereinheiten dieses Torsionsschwingungsdämpferbereichs aufweist.

Die parallele Wirksamkeit der verschiedenen Torsionsschwingungsdämpfereinheiten kann dadurch einfach realisiert werden, dass jede Torsionsschwingungsdämpfereinheit einen Eingangsbereich und einen Ausgangsbereich aufweist und dass die Eingangsbereiche der Torsionsschwingungsdämpfereinheiten eines Torsionsschwingungsdämpferbereichs im Wesentlichen den Eingangsbereich dieses Torsionsschwingungsdämpferbereichs bilden und die Ausgangsbereiche der Torsionsschwingungsdämpfereinheiten eines Torsionsschwingungsdämpferbereichs im Wesentlichen den Ausgangsbereich dieses Torsionsschwingungsdämpferbereichs bilden.

Auch bei Ausgestaltung mit mehreren Torsionsschwingungsdämpfereinheiten kann der zur Verfügung stehende Bauraum sehr effizient dadurch genutzt werden, dass wenigstens eine Torsionsschwingungsdämpfereinheit in einem von dem Turbinenrad und dem Pumpenrad umgebenen Ringraum angeordnet ist.

Gemäß einem weiteren, vorzugsweise in Verbindung mit den vorangehenden Aspekten zu betrachtenden Ausführungsbeispiel wird vorgeschlagen, dass bei wenigstens einem Torsionsschwingungsdämpferbereich wenigstens eine Dämpferfedereinheit eine Mehrzahl von in Umfangsrichtung aufeinander folgenden und bezüglich einander abgestützten Dämpferfedern umfasst.

Auch das Vorsehen mehrerer seriell wirksamer Dämpferfedern innerhalb einer Dämpferfedereinheit vergrößert das bei Drehmomentübertragung nutzbare Federvolumen und verbessert somit die Entkopplungsgüte. Diese Dämpferfedern können über wenigstens ein Zwischenabstützelement bezüglich einander abgestützt sein, wobei dieses Zwischenabstützelement ringartig ausgebildet sein kann und somit keine Maßnahmen zur Radialabstützung desselben erfordert. Der Torsionsschwingungsdämpferbereich, in dem zwei derartige Dämpferfedern seriell wirken, kann beispielsweise der zweite Torsionsschwingungsdämpferbereich sein.

Um bereits im Drehmomentenfluss vor dem Gehäuse der hydrodynamischen Kopplungseinrichtung Drehungleichförmigkeiten bzw. Vibrationen dämpfen bzw. herausfiltern zu können, wird weiter vorgeschlagen, dass im Drehmomentenfluss vor dem Gehäuse ein Torsionsschwingungsdämpfer vorgesehen ist, dessen Eingangsbereich mit einem Antriebsorgan zur gemeinsamen Drehung um die Drehachse zu koppeln ist und dessen Ausgangsbereich mit dem Gehäuse zur gemeinsamen Drehung um die Drehachse zu koppeln ist.

Zur Minderung der Reibwechselwirkung kann beispielsweise vorgesehen sein, dass die andere Baugruppe von erstem Eingangsbereich und erstem Ausgangsbereich für wenigstens einen Umfangsendbereich wenigstens einer ersten Dämpferfedereinheit einen Umfangsabstützbereich aufweist in dessen Bereich die erste Dämpferfedereinheit mit ihrem Umfangsendbereich in Abstand zur Abschlussfläche verläuft. Vor allem eine Reibungsentkopplung oder eine Reibungsminderung in Umfangsendbereichen einer jeweiligen ersten Dämpferfedereinheit ist daher vorteilhaft, da damit im Anfangsbereich einer jeweiligen Feder, in welchem eine Kompression beginnt, im Wesentlichen nicht blockiert wird und sich somit eine jeweilige betroffene erste Dämpferfedereinheit leicht und zuverlässig komprimieren lässt, wenn eine entsprechende Umfangsbelastung auftritt.

Diese Reibungsminderung oder reibungsmäßige Entkopplung in einem Umfangsendbereich kann beispielsweise dadurch erfolgen, dass die erste Dämpferfedereinheit durch den Umfangsabstützbereich oder ein sich daran abstützendes Abstützelement in radialem Abstand zur Abschlussfläche gehalten ist. Alternativ oder zusätzlich ist es möglich, dass die erste Dämpferfedereinheit in ihrem Umfangsendbereich derart geformt ist, dass sie bei fehlender Fliehkraftbelastung in Abstand zur Abschlussfläche verläuft.

Die Herstellung eines Abstands zwischen einem jeweiligen Umfangsendbereich und der Abschlussfläche kann beispielsweise dadurch realisiert werden, dass die erste Dämpferfedereinheit in ihrem Umfangsendbereich eine geringere Außenabmessung aufweist, als in einem von dem Umfangsendbereich weiter entfernt liegenden Bereich, wobei vorzugsweise zum Sicherstellen eines möglichst großen radialen Abstandes vorgesehen sein kann, dass eine Längsmittenachse der ersten Dämpferfedereinheit in dem Umfangsendbereich bezüglich einer Längsmittenachse in dem vom Umfangsendbereich weiter entfernt liegenden Bereich nach radial innen versetzt liegt.

Eine weitere baulich einfach zu realisierende Möglichkeit, einen Umfangsendbereich einer ersten Dämpferfedereinheit von der Abschlussfläche zu entkoppeln, kann dadurch realisiert werden, dass die erste Dämpferfedereinheit in dem Umfangsendbereich radial außen durch einen bezüglich des Umfangsendbereichs radial festen Führungsabschnitt übergriffen ist.

Bei einer alternativ oder zusätzlich vorzusehenden Variante kann in einem Umfangsendbereich die Wechselwirkung zwischen einer ersten Dämpferfedereinheit und der Abschlussfläche dadurch gemindert bzw. vermieden werden, dass die Abschlussfläche in einem dem Umfangsendbereich der ersten Dämpferfedereinheit entsprechenden Umfangsbereich eine von einer Kreisbahn um die Drehachse abweichende Ausformung nach radial außen aufweist.

Um grundsätzlich die unter Fliehkraft auftretende Verformung einer jeweiligen ersten Dämpferfedereinheit nach radial außen und somit deren möglicherweise verstärktes Anlegen gegen die Abschlussfläche zu vermeiden oder zu mindern, kann weiter vorgesehen sein, dass in wenigstens einer ersten Dämpferfedereinheit wenigstens ein diese gegen Verformung nach radial außen stützendes Radialabstützelement angeordnet ist.

Dieses Radialabstützelement kann stangenartig ausgebildet sein oder kann alternativ auch als Schraubenfeder ausgebildet sein und somit selbst eine gewisse Umfangs- und Radialelastizität bzw. Verformbarkeit haben.

Das Anlegen einer ersten Dämpferfedereinheit nach radial außen unter Fliehkraftbelastung kann dadurch auch gemindert oder vermieden werden, dass wenigstens eine erste Dämpferfedereinheit in einem im Wesentlichen unbelasteten Zustand ausgehend von einem Umfangsendbereich nach radial innen gekrümmt ist.

Bei der erfindungsgemäßen hydrodynamischen Kopplungseinrichtung kann beispielsweise vorgesehen sein, dass wenigstens eine erste Dämpferfedereinheit an wenigstens einem Zwischenbereich zwischen deren Umfangsendbereichen über ein Abstützelement bezüglich der Abschlussfläche radial abgestützt ist. Auf diese Art und Weise können auch vergleichsweise lange und in Umfangsrichtung gekrümmt sich erstreckende Dämpferfedern für die erste Dämpferfedereinheit eingesetzt werden, ohne dass diese eine übermäßig starke Reibwechselwirkung mit der Abschlussfläche erzeugen.

Weiter ist es möglich, dass wenigstens eine erste Dämpferfedereinheit eine Mehrzahl von in Umfangsrichtung aufeinander folgenden Dämpferfedern umfasst. Dies gestattet den Einsatz mehrerer Federn für eine jeweilige Dämpferfedereinheit, die dann vergleichsweise kurz sind und sich näherungsweise tangential erstrecken. Bei kurzen Federn ist die Gefahr, dass diese sich fliehkraftbedingt nach radial außen gegen die Abschlussfläche anlegen, deutlich geringer.

Um dabei eine Umfangswechselwirkung zwischen den einzelnen Dämpferfedern erzeugen zu können, wird vorgeschlagen, dass wenigstens zwei Dämpferfedern über ein Abstützelement in Umfangsrichtung bezüglich einander abgestützt sind.

Dabei kann die eine Schwingungsentkopplung beeinträchtigende Wechselwirkung bezüglich der Abschlussfläche dadurch möglichst gering gehalten werden, dass wenigstens ein Abstützelement durch Gleitbewegung bezüglich der Absschlussfläche in Umfangsrichtung bewegbar ist. Alternativ oder zusätzlich ist es möglich, dass wenigstens ein Abstützelement durch Rollbewegung in Umfangsrichtung bezüglich der Abschlussfläche bewegbar ist. Bei einer weiteren Ausgestaltungsvariante, bei welcher eine Reibwechselwirkung bezüglich der Abschlussfläche praktisch vollständig ausgeschlossen werden kann, wird vorgeschlagen, dass wenigstens zwei Dämpferfedern durch eine ringartige Radialabstützanordnung ohne Kontakt zur Abschlussfläche nach radial außen und in Umfangsrichtung bezüglich einander abgestützt sind.

Vor allem bei vergleichsweise langen, in Umfangsrichtung sich erstreckenden ersten Dämpferfedereinheiten kann vorgesehen sein, dass wenigstens eine erste Dämpferfedereinheit in einem Umfangsmittenbereich nach radial außen an der Abschlussfläche anliegt.

Weiterhin wird Schutz beansprucht für ein Antriebssystem für ein Fahrzeug, umfassend eine Brennkraftmaschine, eine die Brennkraftmaschine mit einem Getriebe koppelnde hydrodynamische Kopplungseinheit gemäß der vorbeschriebenen Erfindung, eine das Getriebe mit wenigstens zwei Antriebsrädern über jeweilige Antriebsradwellenanordnungen koppelnde Differentialanordnung, wobei für die Gesamtsteifigkeit G der Antriebsradwellenanordnungen gilt:

$$G = A \times z \ \ [Nm/°],$$

wobei

A     = eine Zahl im Bereich von 30 bis 70, vorzugsweise 40 bis 50, ist

z     = die Anzahl der Zylinder der Brennkraftmaschine ist.

Dabei wird zum Eingliedern einer Elastizität in ein Antriebssystem mit der Intention, Drehungleichförmigkeiten abzufangen, die Torsionselastizität der verschiedenen Baugruppen, hier insbesondere der Antriebsradwellenanordnungen, genutzt. Liegt deren Gesamtsteifigkeit, welche hier selbstverständlich eine Torsionssteifigkeit ist und beispielsweise angegeben ist in Nm, die erforderlich sind, um eine Torsion um eine Winkeleinheit, beispielsweise ein Grad, zu erreichen, in dem angegebenen Bereich, der wiederum abhängig ist von der Anzahl der Zylinder und somit primär auch der Anregungsfrequenz, kann bereits auch außerhalb der möglicherweise mit einem Torsionsschwingungsdämpfer versehenen hydrodynamischen Kopplungseinheit für eine vergleichsweise starke Bedämpfung von auftretenden Schwingungen gesorgt werden.

**Kurze Beschreibung der Zeichnungen**

Die vorliegende Erfindung wird nachfolgend mit Bezug auf die beiliegenden Zeichnungen detailliert beschrieben. Es zeigt:

Fig. 1      eine Teil-Längsschnittansicht einer hinsichtlich des grundsätzlichen Aufbaus bekannten hydrodynamischen Kopplungseinrichtung;

Fig. 1a     die hydrodynamische Kopplungseinrichtung der Fig. 1 in schematischer Darstellung;

Fig. 2      die in Fig. 1 in konstruktiver Ausführung gezeigte Kopplungseinrichtung in prinzipartiger Darstellung;

Fig. 3      eine der Fig. 2 entsprechende Prinzipdarstellung einer Ausgestaltungsart einer Kopplungseinrichtung gemäß einem Vergleichsbeispiel mit drei seriell geschalteten Torsionsschwingungsdämpferbereichen;

Fig. 4     eine weitere der Fig. 2 entsprechende Darstellung einer erfindungsgemäßen Ausgestaltungsform mit drei seriell geschalteten Torsionsschwingungsdämpferbereichen;

Fig. 5     eine weitere der Fig. 2 entsprechende Darstellung einer erfindungsgemäßen Ausgestaltungsform mit drei seriell geschalteten Torsionsschwingungsdämpferbereichen;

Fig. 6     eine weitere der Fig. 2 entsprechende Darstellung einer Ausgestaltungsform gemäß einem Vergleichsbeispiel mit drei seriell geschalteten Torsionsschwingungsdämpferbereichen;

Fig. 7     eine weitere der Fig. 2 entsprechende Darstellung einer erfindungsgemäßen Ausgestaltungsform mit drei seriell geschalteten Torsionsschwingungsdämpferbereichen;

Fig. 8     eine weitere der Fig. 2 entsprechende Darstellung einer erfindungsgemäßen Ausgestaltungsform mit drei seriell geschalteten Torsionsschwingungsdämpferbereichen;

Fig. 9     eine weitere der Fig. 2 entsprechende Darstellung einer erfindungsgemäßen Ausgestaltungsform mit drei seriell geschalteten Torsionsschwingungsdämpferbereichen;

Fig. 10     eine weitere der Fig. 2 entsprechende Darstellung einer erfindungsgemäßen Ausgestaltungsform mit vier seriell geschalteten Torsionsschwingungsdämpferbereichen;

Fig. 11     eine der Fig. 2 entsprechende Darstellung einer Ausgestaltungsform einer Kopplungseinrichtung gemäß einem Vergleichsbeispiel mit zwei seriell geschalteten Torsionsschwingungsdämpferbereichen, wobei einer davon zwei Torsionsschwingungsdämpfereinheiten aufweist;

Fig. 12     eine der Fig. 2 entsprechende Darstellung einer erfindungsgemäßen Ausgestaltungsform einer Kopplungseinrichtung mit drei seriell geschalteten Torsionsschwingungsdämpferbereichen, wobei zwei davon jeweils zwei Torsionsschwingungsdämpfereinheiten aufweisen;

Fig. 13     eine erfindungsgemäße Abwandlung der in Fig. 12 gezeigten Ausgestaltungsform, bei der alle Torsionsschwingungsdämpferbereiche zwei Torsionsschwingungsdämpfereinheiten umfassen;

Fig. 14     eine der Fig. 2 entsprechende Darstellung einer Kopplungseinrichtung gemäß einem Vergleichsbeispiel mit zwei seriell geschalteten Torsionsschwingungsdämpferbereichen, wobei einer davon zwei Torsionsschwingungsdämpfereinheiten umfasst;

Fig. 15     eine der Fig. 2 entsprechende Darstellung einer Kopplungseinrichtung gemäß einem Vergleichsbeispiel mit zwei seriell geschalteten Torsionsschwingungsdämpferbereichen, von welchen jeder zwei Torsionsschwingungsdämpfereinheiten umfasst;

Fig. 16     eine der Fig. 1 entsprechende Darstellung einer Kopplungseinrichtung gemäß einem Vergleichsbeispiel, bei welcher ein zweiter Torsionsschwingungsdämpferbereich zwei parallele Torsionsschwingungsdämpfereinheiten umfasst;

Fig. 17     eine prinzipartige Darstellung eines Antriebssystems für ein Fahrzeug;

Fig. 18     eine Teil-Axialansicht einer Torsionsdämpferanordnung im radial äußeren Bereich;

Fig. 19     eine teilweise in Explosionsansicht dargestellte Ansicht einer Torsionsdämpferanordnung;

Fig. 20     eine Teil-Querschnittansicht einer alternativ ausgestalteten Torsionsdämpferanordnung im radial äußeren Bereich;

Fig. 21     eine der Fig. 20 entsprechende Ansicht einer alternativen Ausgestaltungsform;

Fig. 22     eine weitere Teil-Axial- bzw. Querschnittsansicht einer alternativ ausgestalteten Torsionsdämpferanordnung;

Fig. 23     eine weitere Variante einer Torsionsdämpferanordnung mit Radialabstützung für Dämpferfedern;

Fig. 24     eine weitere Variante einer Torsionsdämpferanordnung mit Radialabstützung für Dämpferfedern;

Fig. 25     einen Umfangsausschnitt einer Torsionsdämpferanordnung mit einer Radialabstützung für Dämpferfedern in deren Umfangsendbereich;

Fig. 26 eine alternative Ausgestaltungsart zur Radialabstützung der Umfangsendbereiche von Dämpferfedern;

Fig. 27 eine weitere Teil-Querschnittsansicht einer alternativen Ausgestaltungsart einer Torsionsdämpferanordnung;

Fig. 28 eine teilweise vereinfacht dargestellte Ansicht einer alternativ ausgestalteten Torsionsdämpferanordnung;

Fig. 29 eine weitere Variante einer Torsionsdämpferanordnung mit in Umfangsrichtung vergleichsweise langen Dämpferfedereinheiten.

**Bester Weg zur Ausführung der Erfindung**

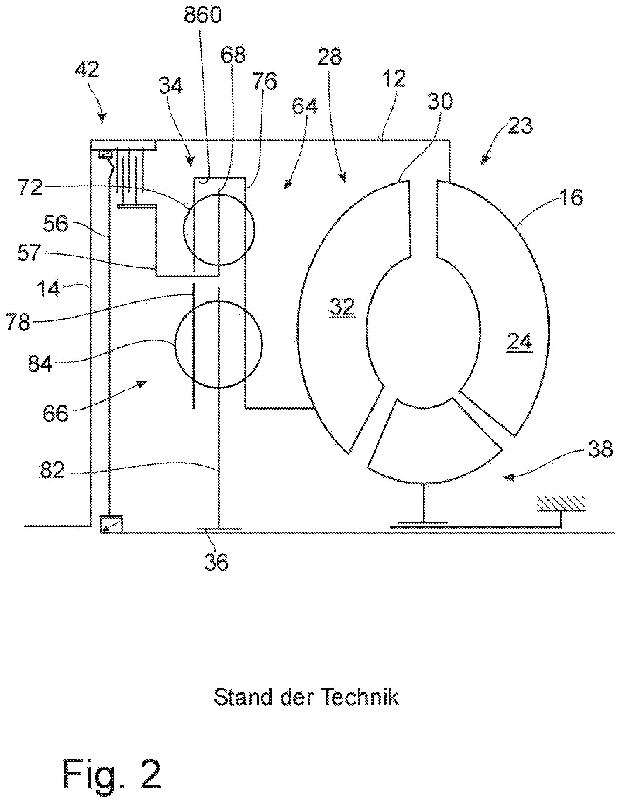

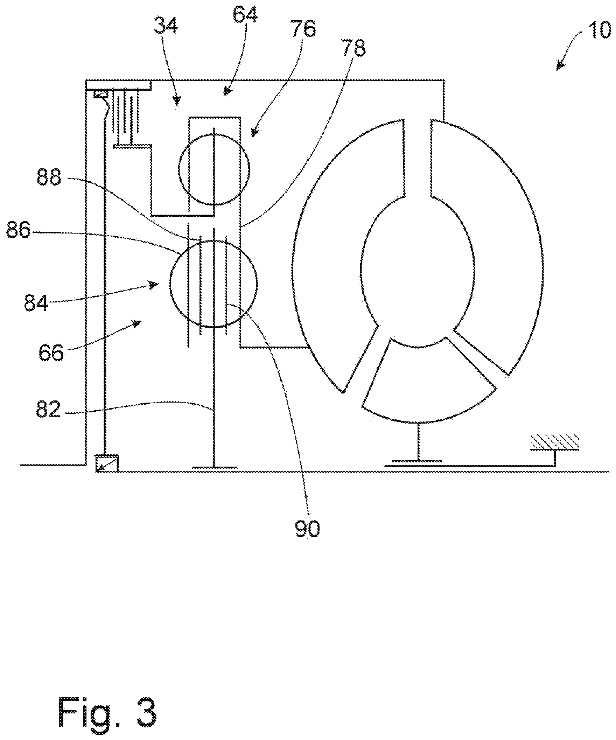

Im Folgenden werden mit Bezug auf die Fig. 3 bis 16 verschiedene Ausgestaltungsformen teilweise erfindungsgemäß aufgebauter hydrodynamischer Kopplungseinrichtungen in Form von hydrodynamischen Drehmomentwandlern beschrieben, die hinsichtlich der grundsätzlichen Ausgestaltung dem vorangehend mit Bezug auf die Fig. 1 und 1a bereits deutlich erläuterten Aufbau entsprechen. Gezeigt sind jedoch zumeist prinzipartige Darstellungen, wie sie auch in Fig. 2 für den in Fig. 1 gezeigten Aufbau veranschaulicht ist. Da bei den im Folgenden erläuterten Ausführungsformen hinsichtlich des grundsätzlichen Aufbaus des Drehmomentwandlers zum vorangehend Beschriebenen keine elementaren Abwandlungen vorhanden sind oder sein müssen, werden im Folgenden im Wesentlichen nur diejenigen Aspekte erläutert, in welchen die jeweiligen Ausgestaltungsformen sich hinsichtlich des in Fig. 2 auch prinzipiell veranschaulichten Stands der Technik unterscheiden.

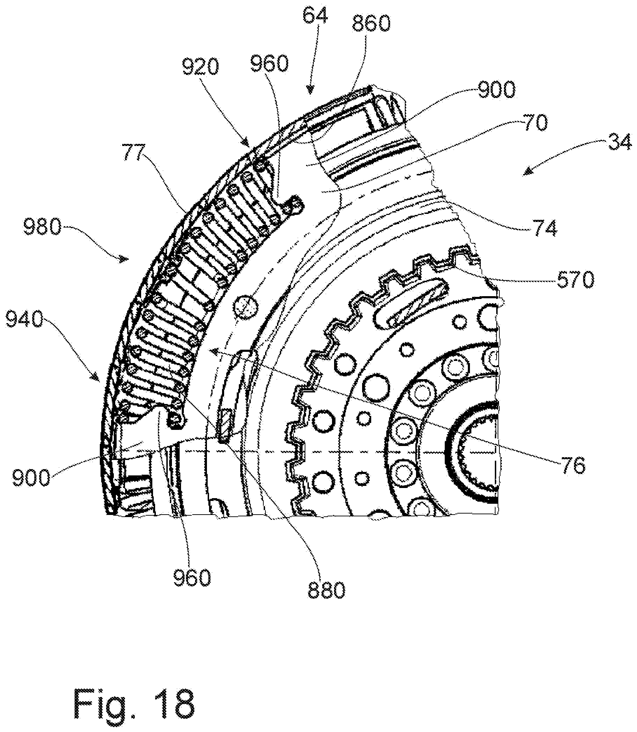

Es sei darauf hingewiesen, dass die folgenden auf die Fig. 3 bis 17 Bezug nehmenden Erläuterungen denjenigen Aspekt bzw. die konstruktiven Maßnahmen betreffen bzw. veranschaulichen, die bei einer Kopplungseinrichtung vorgesehen sein können, um das gesamt nutzbare Federvolumen bzw. die nutzbare Federkonstante zu beeinflussen. Diese Maßnahmen sind vorzugsweise dann kombiniert mit dem nachfolgend mit Bezug auf die Fig. 18 bis 29 erläuterten konstruktiven Ausgestaltungen die vorgesehen sind, um die Reibwechselwirkung insbesondere des radial äußeren, ersten Torsionsschwingungsdämpferbereichs zu mindern bzw. zu vermeiden.

In der Fig. 3 ist ein Aufbau gezeigt, bei welchem zumindest der radial innere, zweite Torsionsschwingungsdämpferbereich 66 der Torsionsdämpferanordnung 34 bei seinen jeweiligen zweiten Dämpferfedereinheiten 84 jeweils zwei bzw. zumindest zwei in Serie geschaltete Dämpferfedern 86 aufweist. Diese stützen sich in Umfangsrichtung an jeweiligen Umfangsabstützbereichen des zweiten Eingangsbereichs 78 bzw. des zweiten Ausgangsbereichs 82 ab bzw. stützen sich über jeweilige ringartige Zwischenabstützelemente 88, 90 in Umfangsrichtung aneinander ab. Da diese ringartigen Zwischenabstützelemente 88, 90 in sich geschlossen sind, ist keine weitere Fliehkraftabstützung nach radial außen erforderlich.

Sind die zweiten Dämpferfedereinheiten 84 beispielsweise mit zwei jeweils seriell geschalteten Dämpferfedern 86 ausgebildet, können die beiden ringartigen Zwischenabstützelemente 88, 90 miteinander fest verbunden sein und selbstverständlich für jede zweite Dämpferfedereinheit 84 jeweilige Abstützbereiche für deren Dämpferfedern 86 bereitstellen, welche im Allgemeinen als Schraubendruckfedern ausgebildet sind. Es sei hier darauf hingewiesen, dass die Dämpferfedern bzw. Schraubendruckfedern auch ineinander geschachtelte Pakete von Schraubendruckfedern umfassen können.

Sind bei den einzelnen zweiten Dämpferfedereinheiten 84 beispielsweise drei in Umfangsrichtung aufeinander folgende Dämpferfedern 86 vorhanden, von welchen jeweils zwei in Umfangsrichtung bezüglich einander abzustützen sind, so kann beispielsweise das ringartige Zwischenabstützelement 88 jeweils für eine der so gebildeten Federpaarungen Abstützbereiche für die zweiten Dämpferfedereinheiten 84 bereitstellen, und das andere ringartige Zwischenabstützelement 90 kann für die andere der Federpaarungen bei den verschiedenen zweiten Dämpferfedereinheiten 84 Abstützbereiche bereitstellen. Die beiden Zwischenabstützelemente 88, 90 sind in diesem Falle dann zum Ermöglichen der Kompression aller drei seriell liegenden Dämpferfedern 86 in Umfangsrichtung bezüglich einander verdrehbar.

Mit derartiger Ausgestaltung der zweiten Dämpferfedereinheiten 84 wird es möglich, ein deutlich vergrößertes Federvolumen in Umfangsrichtung bereitzustellen, so dass einerseits durch entsprechende Auslegung des Gesamtfederwegs und andererseits durch entsprechende Auslegung der Federsteifigkeit eine wesentlich bessere Entkopplungsgüte realisiert werden kann. Es sei darauf hingewiesen, dass eine derartige Ausgestaltung der Dämpferfedereinheiten auch im radial äußeren, ersten Torsionsschwingungsdämpferbereich 64 bzw. dessen ersten Dämpferfedereinheiten 76 oder alternativ im ersten Torsionsschwingungsdämpferbereich 64 realisiert sein kann.

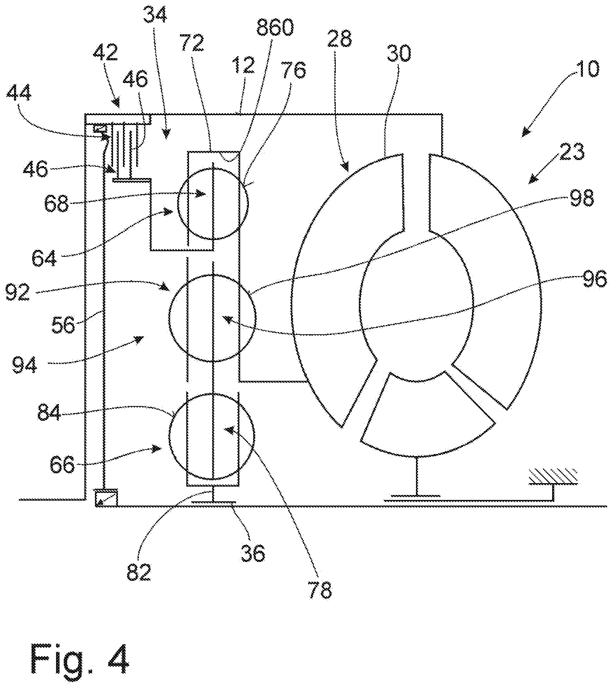

Eine alternative Ausgestaltungsform ist in Fig. 4 gezeigt. Bei dieser Ausgestaltungsvariante umfasst die Torsionsdämpferanordnung 34 drei zueinander seriell geschaltete und radial gestaffelte Torsionsschwingungsdämpferbereiche. Man erkennt ganz radial außen den ersten Torsionsschwingungsdämpferbereich 64 mit seinem ersten Eingangsbereich 68, beispielsweise bereitgestellt durch ein Zentralscheibenelement, und seinem ersten Ausgangsbereich 72, beispielsweise bereitgestellt durch zwei Deckscheibenelemente. Diese beiden Deckscheibenelemente bilden mit ihrem radial inneren Bereich den dritten Eingangsbereich 92 eines dritten Torsionsschwingungsdämpferbereichs 94, der unmittelbar radial innerhalb des ersten Torsionsschwingungsdämpferbereichs 64 angeordnet ist. Ein dritter Ausgangsbereich 96 dieses dritten Torsionsschwingungsdämpferbereichs 94, hier beispielsweise ausgebildet als Zentralscheibenelement, ist mit dem dritten Eingangsbereich 92 über eine Mehrzahl dritter Dämpferfedereinheiten 98 gekoppelt.

Der dritte Ausgangsbereich 96 bildet nunmehr gleichzeitig mit seinem radial inneren Bereich den auch hier in Form eines Zentralscheibenelements beispielsweise dann ausgebildeten zweiten Eingangsbereich 78 des zweiten Torsionsschwingungsdämpferbereichs 66, der mit seinem hier zwei Deckscheibenelemente umfassenden zweiten Ausgangsbereich 82 an die Turbinenradnabe 36 angebunden ist. Der zweite Torsionsschwingungsdämpferbereich 66 liegt radial innerhalb des dritten Torsionsschwingungsdämpferbereichs 94.

Durch die serielle Staffelung dreier Torsionsschwingungsdämpferbereiche 64, 94, 66 wird ein deutlich größeres Federvolumen und mithin eine geringere Gesamtsteifigkeit erzielt, wodurch sich eine deutlich bessere Entkopplungsgüte ergibt.

Bei der in Fig. 4 gezeigten Ausgestaltungsvariante ist die Turbinenradschale 30 an den ersten Ausgangsbereich 92 bzw. den dritten Eingangsbereich 92 angekoppelt. D.h., bei Drehmomentübertragung über das Turbinenrad 28 bei beispielsweise vollständig ausgerückter Überbrückungskupplungsanordnung 42 sind die beiden Torsionsschwingungsdämpferbereiche 94, 66 als solche wirksam.

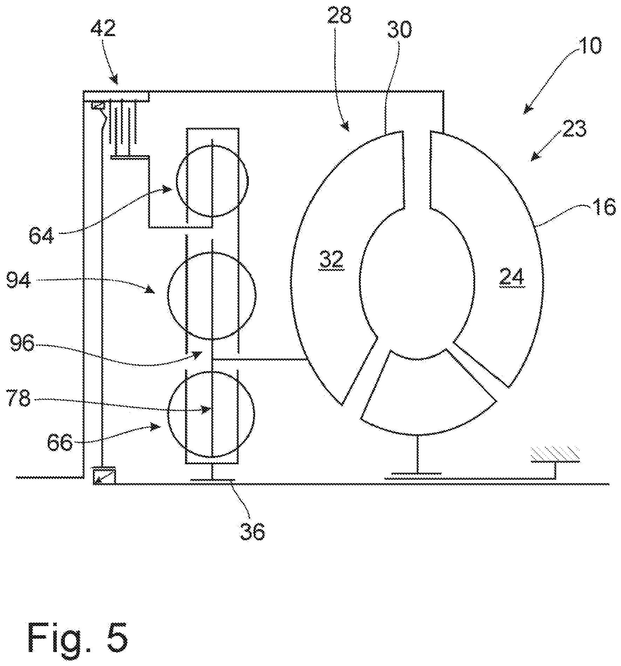

Bei der in Fig. 5 gezeigten Ausgestaltungsvariante, welche im Wesentlichen der vorangehend mit Bezug auf die Fig. 4 beschriebenen entspricht, ist die Turbinenradschale 30 des Turbinenrads 28 nunmehr an den dritten Ausgangsbereich 96 und somit auch den zweiten Eingangsbereich 78 angebunden. Während hier also bei Drehmomentübertragung über die Überbrückungskupplungsanordnung 42 wieder alle drei Torsionsschwingungsdämpferbereiche 64, 94, 66 wirksam sind, ist bei Drehmomentübertragung über das Turbinenrad 28, also beispielsweise im Drehmomentwandlungsbetrieb, lediglich der zweite und unmittelbar an die Turbinenradnabe 36 angebundene Torsionsschwingungsdämpferbereich 66 wirksam.

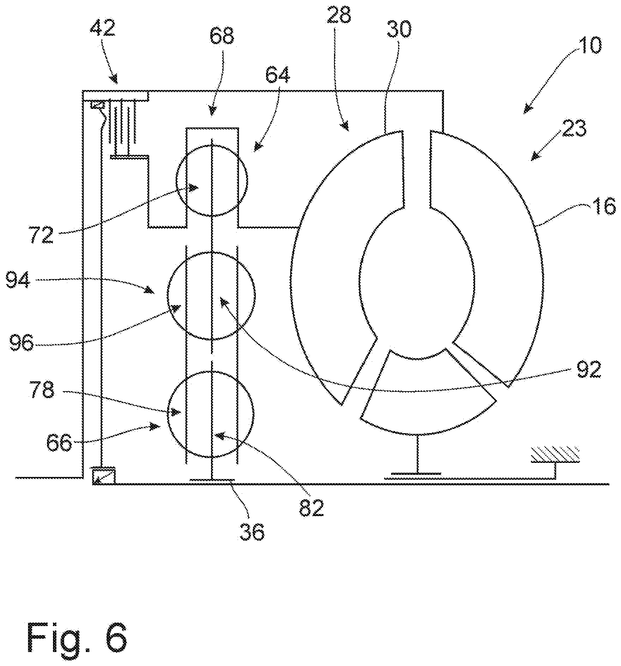

Auch bei der in Fig. 6 gezeigten Ausgestaltungsvariante sind wieder die drei radial gestaffelten Torsionsschwingungsdämpferbereiche 64, 94, 66 vorgesehen, die bei eingerückter Überbrückungskupplungsanordnung 42 das Drehmoment in Richtung Turbinenradnabe 36 leiten. Die Turbinenradschale 30 des Turbinenrads 28 ist hier an den ersten Eingangsbereich 68 angekoppelt, so dass bei ausgerückter Überbrückungskupplungsanordnung 42 und Drehmomentübertragung bzw. Drehmomentverstärkung über die Turbinenradschale 30 alle drei Torsionsschwingungsdämpferbereiche 64, 94 und 66 wirksam sind, ebenso wie in dem Fall, in dem die Überbrückungskupplungsanordnung 42 eingerückt ist.

Bei dieser Ausgestaltungsform ist eine vergleichsweise hohe Masse der Turbinenradschale 30 mit den daran vorgesehenen Turbinenradschaufeln 32 besonders vorteilhaft, da dann in sehr effektiver Art und Weise diese Turbinenradschale 30 durch die beiden Torsionsschwingungsdämpferbereiche 64, 94 von einer Pumpenbewegung entkoppelt werden kann.

Man erkennt in Fig. 6 weiter, dass im Vergleich zu den vorangehend beschriebenen Ausgestaltungsformen hier bei den jeweiligen Eingangs- und Ausgangsbereichen die Ausgestaltung mit Zentralscheibenelement einerseits bzw. Deckscheibenelementen andererseits vertauscht ist. In Fig. 6 weist also der erste Eingangsbereich 68 zwei Deckscheibenelemente auf, während der erste Ausgangsbereich 72 ein Zentralscheibenelement aufweist. Auch der dritte Eingangsbereich 92 ist nunmehr als Zentralscheibenelement ausgebildet, während der dritte Ausgangsbereich 96, ebenso wie der zweite Eingangsbereich 78 mit den beiden Deckscheibenelementen ausgebildet ist. Der zweite Ausgangsbereich 82 ist hier wieder als Zentralscheibenelement realisiert. Es sei darauf hingewiesen, dass auch bei den anderen vorangehend beschriebenen Ausgestaltungsformen hier eine beliebige Ausgestaltung der Eingangsbzw. Ausgangsbereiche mit Zentralscheibenelement oder Deckscheibenelementen gewählt werden kann.

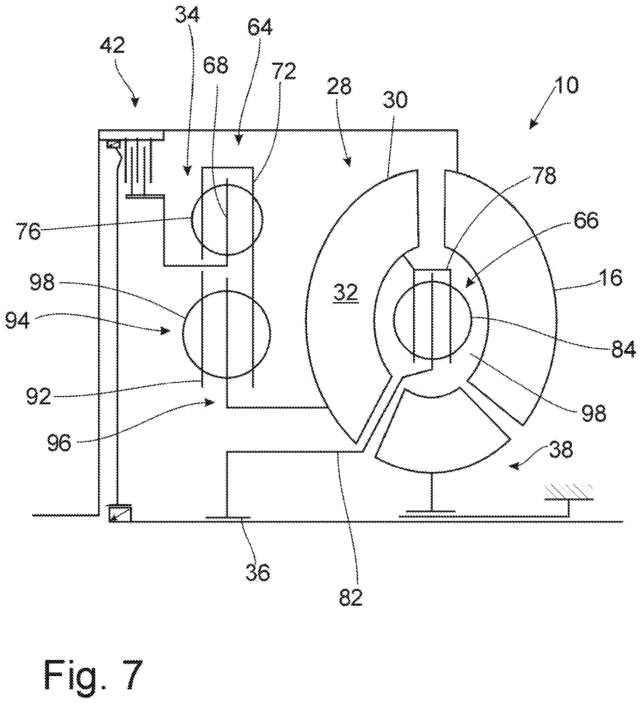

Eine weitere Abwandlung einer Torsionsdämpferanordnung 34 mit drei seriell geschalteten Torsionsschwingungsdämpferbereichen ist in Fig. 7 gezeigt. Man erkennt hier wieder die radial ineinander gestaffelt liegenden Torsionsschwingungsdämpferbereiche 64, 94, wobei der hier beispielsweise mit einem Zentralscheibenelement ausgebildete Ausgangsbereich 96 des dritten Torsionsschwingungsdämpferbereichs 94 an die Turbinenradschale 30 angebunden ist.

Der dritte Torsionsschwingungsdämpferbereich 66 ist in einem um die Drehachse sich ringartig erstreckenden Ringraum 100 angeordnet, welcher im Wesentlichen von der Turbinenradschale 30, der Pumpenradschale 16 bzw. auch dem Leitrad 38 umgeben bzw. begrenzt ist. Der hydrodynamische Kreislauf zirkuliert hier also um den zweiten Torsionsschwingungsdämpferbereich 66, dessen zweiter Ausgangsbereich 82, hier wieder mit einem Zentralscheibenelement ausgebildet, in einem Zwischenraum zwischen dem Turbinenrad bzw. der Turbinenradschale 30 und den daran vorgesehenen Turbinenradschaufeln 32 und dem Leitrad 38 hindurchgreift und an die Turbinenradnabe 36 angebunden ist. Bei Drehmomentübertragung über die Turbinenradschale 30 ist hier also im Wesentlichen nur der zweite Torsionsschwingungsdämpferbereich 66 wirksam.

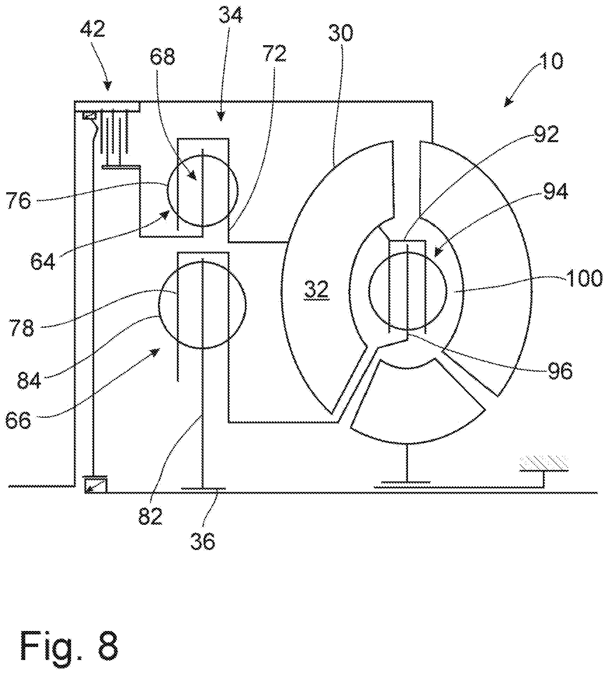

Die Fig. 8 zeigt eine Ausgestaltungsvariante, bei welcher der erste Torsionsschwingungsdämpferbereich 64 und der zweite Torsionsschwingungsdämpferbereich 66 radial gestaffelt liegen. Die Turbinenradschale 30 ist an den ersten Ausgangsbereich 72 angebunden. Der dritte Torsionsschwingungsdämpferbereich 94 ist nunmehr im Ringraum 100 angeordnet. Dessen hier beispielsweise mit zwei Deckscheibenelementen ausgebildeter dritter Eingangsbereich 92 ist an die Turbinenradschale 30 bzw. die damit verbundenen Turbinenradschaufeln 32 angebunden. Der mit einem Zentralscheibenelement hier ausgebildete dritte Ausgangsbereich ist an den zweiten Eingangsbereich 78 des zweiten Torsionsschwingungsdämpferbereichs 66 angebunden.

Bei ausgerückter Überbrückungskupplungsanordnung 42 liegen also im Drehmomentübertragungsweg zwischen der Turbinenradschale 30 und der Turbinenradnabe 36 die zueinander seriell geschalteten, jedoch axial aufeinander folgend angeordneten Torsionsschwingungsdämpferbereiche 94 und 66.

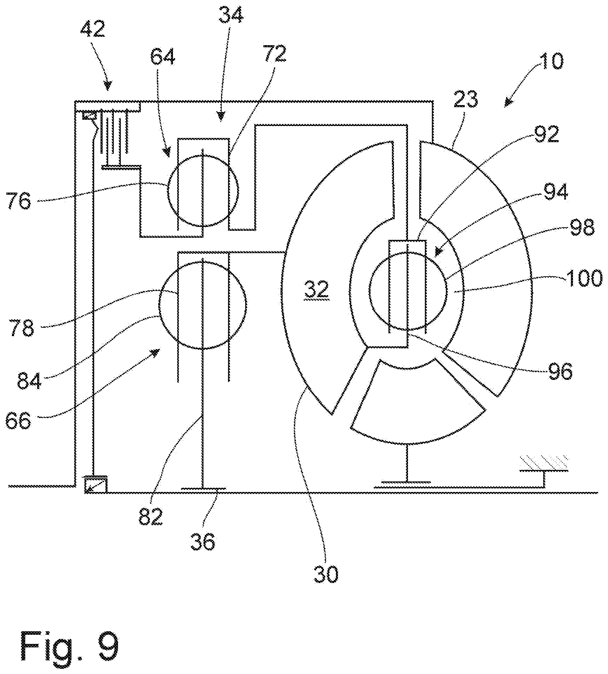

Bei der in Fig. 9 gezeigten Ausgestaltungsform ist wiederum der dritte Torsionsschwingungsdämpferbereich 94 im Ringraum 98 liegend angeordnet. Sein beispielsweise mit zwei Deckscheibenelementen ausgebildeter dritter Eingangsbereich 92 ist mit dem ersten Ausgangsbereich 72 des ersten Torsionsschwingungsdämpferbereichs 64 verbunden. Der dritte Ausgangsbereich 96 ist über die Turbinenradschale 30 an den zweiten Eingangsbereich 78 des zweiten Torsionsschwingungsdämpferbereichs 66 angekoppelt.

Bei dieser Ausgestaltungsvariante liegen also grundsätzlich bei Drehmomentübertragung über die Überbrückungskupplungsanordnung 42 die drei Torsionsschwingungsdämpferbereiche 64, 94, 66 wieder in serieller Schaltung. Bei ausgerückter Überbrückungskupplungsanordnung 42 ist lediglich der zweite Torsionsschwingungsdämpferbereich 66 zwischen der Turbinenradschale 30 bzw. den Turbinenradschaufeln 32 derselben und der Turbinenradnabe 36 wirksam.

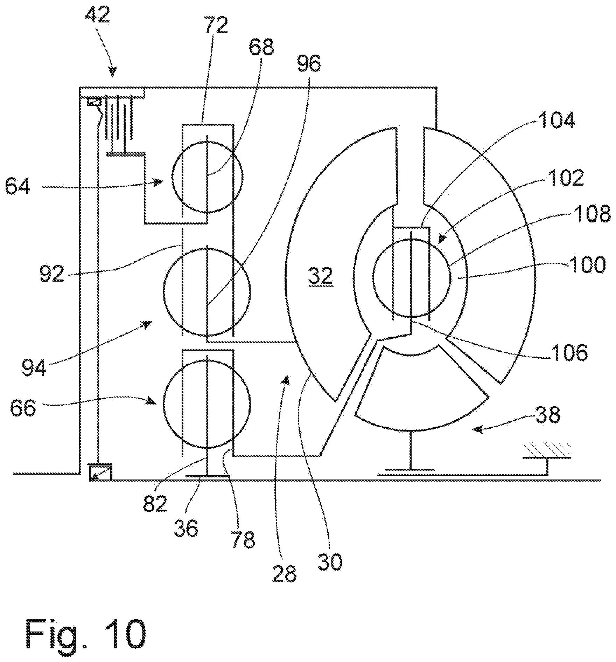

Die Fig. 10 zeigt eine Ausgestaltungsvariante mit vier in Serie geschalteten Torsionsschwingungsdämpferbereichen. Man erkennt auch hier wieder den ersten Torsionsschwingungsdämpferbereich 64, dessen erster Eingangsbereich 68, beispielsweise wieder mit einem Zentralscheibenelement ausgebildet, an die Überbrückungskupplungsanordnung 42 angekoppelt ist. Der erste Ausgangsbereich 72 ist wieder in Verbindung mit dem dritten Eingangsbereich 92 des dritten Torsionsschwingungsdämpferbereichs 94. Der dritte Ausgangsbereich 96 ist an die Turbinenradschale 30 des Turbinenrads 28 angebunden. Ein vierter Torsionsschwingungsdämpferbereich 102 ist nunmehr im Ringraum 100 angeordnet. Der vierte Torsionsschwingungsdämpferbereich 102 weist einen vierten Eingangsbereich 104, beispielsweise ausgebildet mit zwei Deckscheibenelementen, auf, der hier an die Turbinenradschale und somit auch die damit fest verbundenen Turbinenradschaufeln 32 angebunden ist. Ein vierter Ausgangsbereich 106 des vierten Torsionsschwingungsdämpferbereichs 102, welcher Ausgangsbereich hier mit einem Zentralscheibenelement ausgebildet sein kann, ist an den zweiten Eingangsbereich 78 des zweiten Torsionsschwingungsdämpferbereichs 66 angebunden, dessen zweiter Ausgangsbereich 82 mit der Turbinenradnabe 36 verbunden ist. Über vierte Dämpferfedereinheiten 108 sind der vierte Eingangsbereich 104 und der vierte Ausgangsbereich 106 zur Drehmomentübertragung so gekoppelt, dass sie sich, wie auch bei allen anderen Torsionsschwingungsdämpferbereichen, unter Kompression der Dämpferfedereinheiten bezüglich einander drehen können.

Man erkennt bei der in Fig. 10 gezeigten Ausgestaltungsvariante, dass der erste Torsionsschwingungsdämpferbereich 64 und der dritte Torsionsschwingungsdämpferbereich 94 im Drehmomentenfluss zwischen der Überbrückungskupplungsanordnung 42 und der Turbinenradschale 30 liegen, während der vierte Torsionsschwingungsdämpferbereich 102 und der zweite Torsionsschwingungsdämpferbereich 66 im Drehmomentübertragungsweg zwischen der Turbinenradschale 30 und der Turbinenradnabe 36 liegen. Bei eingerückter Überbrückungskupplungsanordnung 42 sind daher alle vier in Serie geschalteten Torsionsschwingungsdämpferbereiche 64, 94, 102 und 66 wirksam. Bei ausgerückter Überbrückungskupplungsanordnung 42 wirken nur die beiden Torsionsschwingungsdämpferbereiche 102 und 66 zur Schwingungsdämpfung zwischen der Turbinenradschale 30 und der Turbinenradnabe 36.

Bei der in Fig. 10 gezeigten Ausgestaltungsform wird der zur Verfügung stehende Bauraum besonders effizient genutzt, da drei der Torsionsschwingungsdämpferbereiche radial gestaffelt liegen, während ein weiterer axial versetzt liegt, und zwar in dem ansonsten bauraummäßig nicht genutzten Ringraum 100. Um bei dem im Ringraum 100 liegenden vierten Torsionsschwingungsdämpferbereich 102, dessen Ausgangsbereich, wie vorangehend bereits dargelegt, durch eine zwischen dem der Turbinenradschale 30 und dem Leitrad 38 hindurchgreifenden Abschnitt mit einer im Drehmomentenfluss folgenden Baugruppe gekoppelt ist, eine ungewünschte Wechselwirkung der Fluidzirkulation im Übergangsbereich zwischen der Turbinenradschale 30 und dem Leitrad 38 zu vermeiden, kann dieser Verbindungsabschnitt mit mehreren in Umfangsrichtung diskret liegenden und mit vergleichsweise großen Zwischenräumen angeordneten Stegen ausgebildet sein, zwischen welchen das zirkulierende Fluid im Wesentlichen ungehindert hindurchtreten kann.

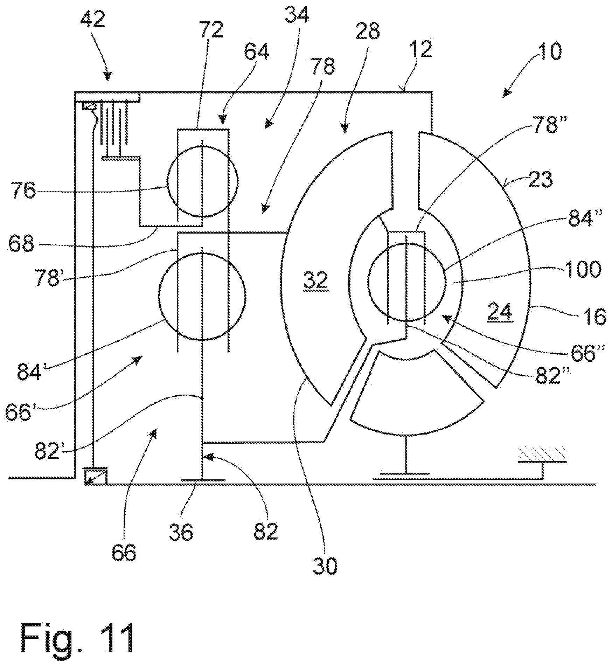

In Fig. 11 ist ein weiterer Drehmomentwandler 10 gezeigt, bei dem grundsätzlich im Drehmomentübertragungsweg zwischen dem Gehäuse 12 und der Turbinenradnabe 36 zwei Torsionsschwingungsdämpferbereiche 64, 66 seriell wirksam sind. Bei dem Ausgestaltungsbeispiel weist jedoch der zweite Torsionsschwingungsdämpferbereich 66 zwei zueinander parallel wirksame Torsionsschwingungsdämpfereinheiten 66', 66" auf. Die erste Torsionsschwingungsdämpfereinheit 66' des zweiten Torsionsschwingungsdämpferbereichs 66 ist dabei radial gestaffelt zum ersten Torsionsschwingungsdämpferbereich 64 angeordnet. Die zweite Torsionsschwingungsdämpfereinheit 66" des zweiten Torsionsschwingungsdämpferbereichs 66 ist im Ringraum 100 angeordnet. Die beiden Torsionsschwingungsdämpfereinheiten 66', 66" liegen somit also näherungsweise auf gleichem radialem Niveau und axial aufeinander folgend bzw. mit axialem Versatz.

Jede dieser Torsionsschwingungsdämpfereinheiten 66', 66" ist wiederum mit einem hier beispielsweise jeweils mit zwei Deckscheibenelementen ausgebildeten Eingangsbereich 78', 78" ausgebildet, die in Gesamtheit den zweiten Eingangsbereich 78 bereitstellen. Dabei sind die Eingangsbereiche 78', 78" miteinander über die Turbinenradschale 30 verbunden und sind weiterhin an den ersten Ausgangsbereich 72 des ersten Torsionsschwingungsdämpferbereichs 64 angebunden.

Gleichermaßen weisen die beiden Torsionsschwingungsdämpfereinheiten 66', 66" einen Ausgangsbereich 82', 82" auf, hier beispielsweise jeweils mit einem Zentralscheibenelement ausgebildet, die miteinander fest verbunden sind und in ihrer Gesamtheit den zweiten Ausgangsbereich 82 bereitstellen. In jeder der Torsionsschwingungsdämpfereinheiten 66', 66" sind beispielsweise mindestens zwei zweite Dämpferfedereinheiten 84' bzw. 84" des zweiten Torsionsschwingungsdämpferbereichs 66 vorgesehen.

Es sei hier darauf hingewiesen, dass beispielsweise bei dieser Ausgestaltungsvariante der Aufbau der einzelnen Torsionsschwingungsdämpfereinheiten 66', 66" so gewählt sein kann, wie er bei der in Fig. 8 gezeigten Ausgestaltungsvariante für den zweiten Torsionsschwingungsdämpferbereich 66 und den dritten Torsionsschwingungsdämpferbereich 94 vorgesehen ist, wobei der Unterschied darin besteht, dass bei der Ausgestaltungsvariante der Fig. 8 eine serielle Anordnung und Wirkung vorhanden ist, während bei der Ausgestaltungsform gemäß Fig. 11 eine parallele Wirkungsweise vorhanden ist.

Durch die Parallelwirkung mehrerer Torsionsschwingungsdämpfereinheiten 66', 66" in einem Torsionsschwingungsdämpferbereich 66 wird es möglich, eine Ausgestaltung auch für sehr große zu übertragende Drehmomente zu realisieren, da eine größere Anzahl an Dämpferfedern gleichzeitig parallel komprimiert werden kann bzw. muss.

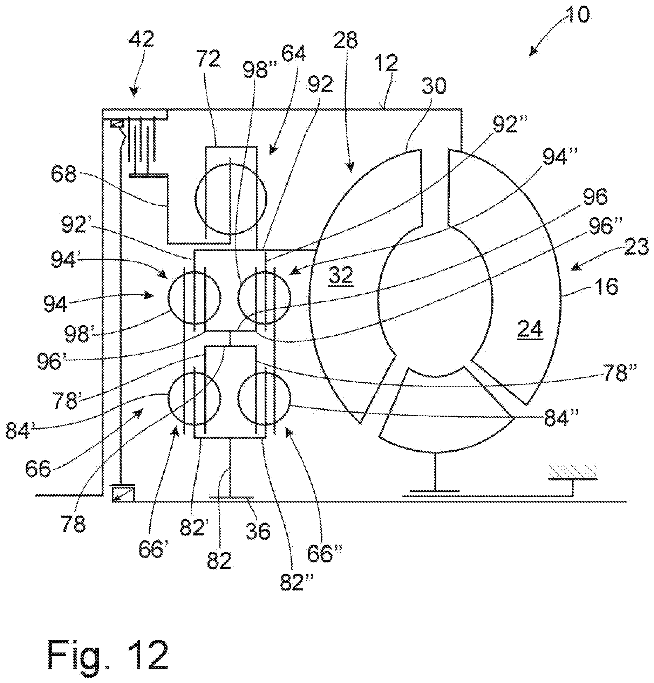

In Fig. 12 ist eine Ausgestaltungsvariante des Drehmomentwandlers 10 gezeigt, bei dem wiederum drei Torsionsschwingungsdämpferbereiche 64, 94 und 66 grundsätzlich seriell wirksam sind. Während der erste Torsionsschwingungsdämpferbereich 64 wieder so ausgebildet sein kann, wie vorangehend beschrieben, sind beim zweiten Torsionsschwingungsdämpferbereich 66 und beim dritten Torsionsschwingungsdämpferbereich 94 jeweils zwei zueinander parallel wirksame Torsionsschwingungsdämpfereinheiten 66', 66", 94', 94" vorhanden.

Die Eingangsbereiche 92', 92" der Torsionsschwingungsdämpfereinheiten 94', 94" des dritten Torsionsschwingungsdämpferbereichs 94 bilden zusammen dessen dritten Eingangsbereich 92, der mit dem ersten Ausgangsbereich 72 und im dargestellten Beispiel auch der Turbinenradschale 30 des Turbinenrads 28 verbunden ist. Die Ausgangsbereiche 96', 96" der Torsionsschwingungsdämpfereinheiten 94', 94" bilden wieder zusammen den dritten Ausgangsbereich 96 des dritten Torsionsschwingungsdämpferbereichs 94. Dieser dritte Ausgangsbereich 96 ist verbunden mit dem zweiten Eingangsbereich 78 des zweiten Torsionsschwingungsdämpferbereichs 66, wobei dieser zweite Eingangsbereich 78 wieder die Eingangsbereiche 78', 78" der Torsionsschwingungsdämpfereinheiten 66', 66" des zweiten Torsionsschwingungsdämpferbereichs 66 umfasst.

Auch bei dieser Ausgestaltungsvariante wird eine sehr kompakte Bauweise erhalten, bei welcher insbesondere dann, wenn ein Drehmoment über die Turbinenradschale 30 zu übertragen ist, durch die serielle Wirksamkeit zweier Torsionsschwingungsdämpferbereiche einerseits und dabei die parallele Wirksamkeit von jeweils zwei Torsionsschwingungsdämpfereinheiten andererseits für einen großen Drehmomentenbereich eine hervorragende Entkopplungsgüte erzielt werden kann.

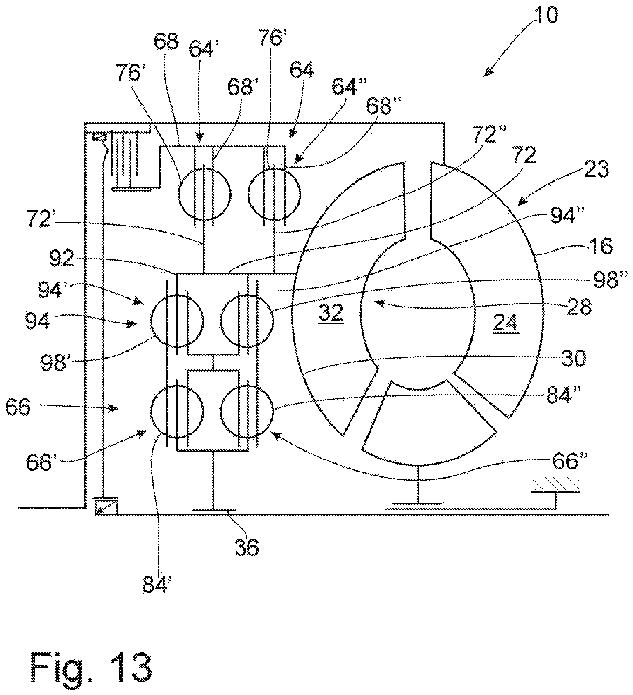

In Fig. 13 ist eine weitere Qualitätssteigerung bei der Entkopplungsgüte dadurch erzielt, dass nunmehr auch der erste Torsionsschwingungsdämpferbereich 64 mit zwei Torsionsschwingungsdämpfereinheiten 64', 64" ausgebildet ist, die, ähnlich wie die Torsionsschwingungsdämpfereinheiten 94', 94" und 66', 66", axial nebeneinander liegend angeordnet sind. Der erste Eingangsbereich 68 umfasst dabei die Eingangsbereiche 68', 68" der Torsionsschwingungsdämpfereinheiten 64', 64". Der erste Ausgangsbereich 72, welcher hier auch mit dem dritten Eingangsbereich 92 verbunden ist, umfasst die beiden Ausgangsbereiche 72' und 72" der Torsionsschwingungsdämpfereinheiten 64', 64". Ansonsten entspricht insbesondere hinsichtlich der Ausgestaltungsart der Torsionsschwingungsdämpferbereiche 94 und 66 diese Ausgestaltunsform dem vorangehend mit Bezug auf die Fig. 12 beschriebenen. Da hier neben den Dämpferfedereinheiten 98', 98" des dritten Torsionsschwingungsdämpferbereichs 94 und 84', 84" des zweiten Torsionsschwingungsdämpferbereichs 66 auch die parallel zueinander wirksamen Dämpferfedereinheiten 76', 76" des ersten Torsionsschwingungsdämpferbereichs 64 bzw. von dessen Torsionsschwingungsdämpfereinheiten 64', 64" zur Drehmomentübertragung genutzt werden können, ist der in Fig. 13 gezeigte Drehmomentwandler 10 insbesondere für sehr große zu übertragende Drehmomente bzw. Drehmomentschwankungen geeignet.

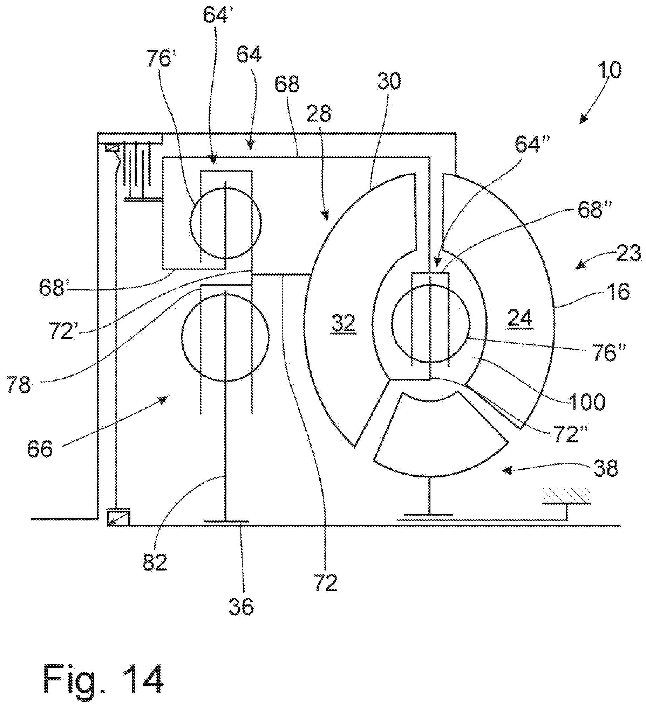

Die Fig. 14 zeigt eine Ausgestaltungsvariante, bei welcher der erste Torsionsschwingungsdämpferbereich 64 mit zwei Torsionsschwingungsdämpfereinheiten 64', 64" ausgebildet ist, von welchen die Torsionsschwingungsdämpfereinheit 64" im Ringraum 100 angeordnet ist. Die Turbinenradschale 30 ist z.B. mit ihren Turbinenradschaufeln 32 an den ersten Ausgangsbereich 72 angebunden, mit welchem auch der zweite Eingangsbereich 78 des hier nur eine Einheit umfassenden zweiten Torsionsschwingungsdämpferbereichs 66 verbunden ist. Hier sind also die beiden Ausgangsbereiche 72' und 72" des ersten Torsionsschwingungsdämpferbereichs 34 über die Turbinenradschale 30 miteinander verbunden. Der Eingangsbereich 68" der im Ringraum 100 angeordneten Torsionsschwingungsdämpfereinheit 64" ist über ein den spaltartigen Zwischenraum zwischen dem Pumpenrad 23 und dem Turbinenrad 28 durchgreifendes Element mit dem Eingangsbereich 68 der Torsionsschwingungsdämpfereinheit 64' verbunden. Auch dieses Verbindungselement kann mit mehreren vergleichsweise dünnen Stegen ausgebildet sein, um die Fluidzirkulation zwischen dem Pumpenrad 23 und dem Turbinenrad 28 so wenig als möglich zu beeinträchtigen, wie dies bei allen Varianten mit im Ringraum 100 angeordnetem Torsionsschwingungsdämpfer vorgesehen sein kann.

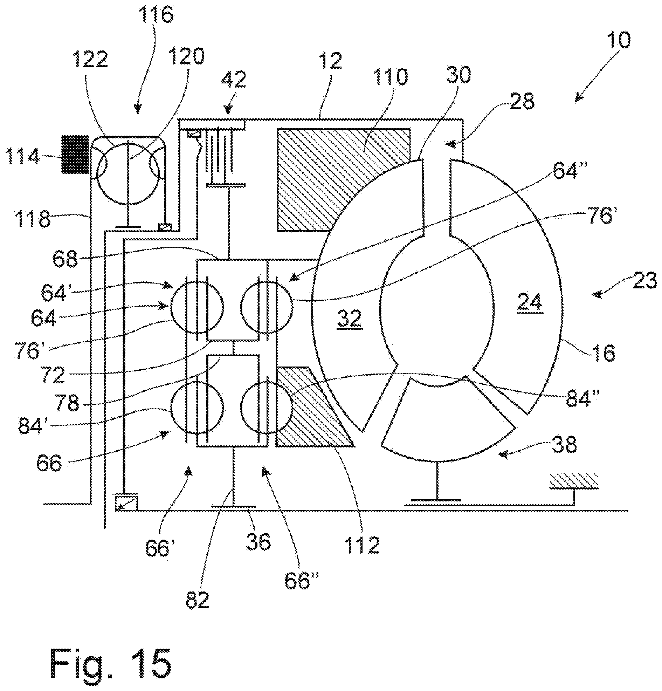

In Fig. 15 ist eine Ausgestaltungsvariante gezeigt, bei welcher die beiden im Wandlergehäuse 12 angeordneten Torsionsschwingungsdämpferbereiche 64, 66 grundsätzlich wieder radial zueinander gestaffelt angeordnet sind und jeweils zwei axial nebeneinander liegende Torsionsschwingungsdämpfereinheiten 64', 64" bzw. 66', 66" umfassen. Die Turbinenradschale 30 ist an den ersten Eingangsbereich 68 angebunden, so dass auch im Drehmomentwandlungszustand beide Torsionsschwingungsdämpferbereiche 64, 66 wirksam sind. Um hier die Schwingungsverhältnisse vorteilhaft zu beeinflussen, können verschiedene beispielsweise ringartig ausgebildete Masseteile 110, 112 bzw. 114 vorgesehen sein. Das Masseteil 110 ist an der Turbinenradschale 30 bzw. dem ersten Eingangsbereich 68 vorgesehen, während das Masseteil 112 am zweiten Eingangsbereich 78 bzw. ersten Ausgangsbereich 72, also schwingungstechnisch zwischen den Dämpferfedereinheiten 76', 76" des ersten Torsionsschwingungsdämpferbereichs und 84', 84" des zweiten Torsionsschwingungsdämpferbereichs 66 vorgesehen ist. Die Zusatzmasse 114 kann beispielsweise als Anlasserzahnkranz ausgebildet sein und außen am Gehäuse 12 oder einer diesem vorgeschalteten Baugruppe vorgesehen sein. Diese Baugruppe ist in der in Fig. 15 dargestellten Ausgestaltungsvariante als weiterer Torsionsschwingungsdämpfer 116 ausgebildet, dessen beispielsweise zwei Deckscheibenelemente umfassender Eingangsbereich 118 an ein Antriebsorgan, also beispielsweise die Kurbelwelle einer Brennkraftmaschine, angekoppelt ist, während sein beispielsweise als Deckscheibenelement ausgebildeter Ausgangsbereich 120 an das Gehäuse 12 angebunden ist. Auch hier dienen mehrere Dämpferfedereinheiten 126 zur Drehmomentübertragungskopplung zwischen dem Eingangsbereich 118 und dem Ausgangsbereich 120. Der Ausgangsbereich 120 kann dabei mit dem Gehäuse 12 beispielsweise durch eine Verzahnungsformation axial verschiebbar gekoppelt sein, wobei hier vorzugsweise eine Umfangsverspannung vorgesehen ist, um eine klapperfreie Verbindung zu realisieren. Die Montage in einem Antriebsstrang kann beispielsweise so erfolgen, dass zunächst der Torsionsschwingungsdämpfer 116 an einer Kurbelwelle angebracht wird, während der Drehmomentwandler 10 an einem Getriebe bzw. dessen Eingangswelle vormontiert wird. Beim Zusammensetzen des Getriebes mit der Brennkraftmaschine wird dann die angesprochene Steckverbindung hergestellt.

Es sei darauf hingewiesen, dass selbstverständlich alternativ oder zusätzlich auch an anderen Bauteilen oder Baugruppen Zusatzmassen vorgesehen sein können. So kann beispielsweise die Masse des zweiten Ausgangsbereichs 22 ebenso erhöht werden.

Die in Fig. 15 gezeigte Ausgestaltungsvariante ist besonders deshalb vorteilhaft, da bereits vor Drehmomenteneinleitung in den Drehmomentwandler 10 Drehschwingungen, die insbesondere durch die Schwingungsanregung durch periodische Zündvorgänge in einer Brennkraftmaschine erzeugt werden, durch den Torsionsschwingungsdämpfer 116 zumindest vorgefiltert werden können, so dass die am Drehmomentwandler 10 auftretende Belastung bereits deutlich reduziert ist. Von weiterem Vorteil ist bei dieser Ausgestaltungsform, dass die Überbrückungskupplungsanordnung 42 sehr weit radial außen, insbesondere radial außerhalb der beiden Torsionsschwingungsdämpferbereiche 64, 66 angeordnet werden kann. Da diese durch die jeweils parallel wirkenden Torsionsschwingungsdämpfereinheiten 64', 64", 66', 66" bereits ein großes Federvolumen aufweisen, können sie mit etwas reduzierter radialer Baugröße ausgebildet werden. Auf Grund dieser Möglichkeit, die radiale Baugröße zu verringern, rücken auch die Dämpferfedereinheiten 76', 76", 84', 84" weiter nach radial innen, so dass deren Fliehkraftbelastung und damit innerhalb der jeweiligen Torsionsdämpfereinheiten auftretende Reibkräfte vermindert werden können, was wiederum die Entkopplungsgüte steigert.

Es sei darauf hingewiesen, dass bei allen beschriebenen erfindungsgemäßen Ausgestaltungsvarianten ein derartiger zusätzlicher Torsionsschwingungsdämpfer 116 im Drehmomentenfluss vor dem Gehäuse 12 (bezogen auf den Schubzustand) angeordnet sein kann.

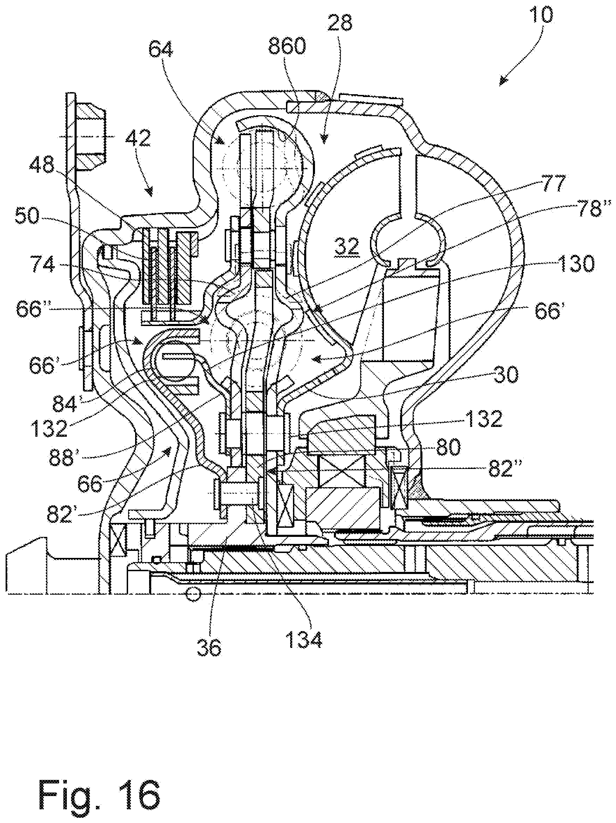

Die Fig. 16 zeigt in konstruktiver Ausführung einen Drehmomentwandler 10, der in weiten Bereichen dem vorangehend bereits mit Bezug auf die Fig. 1 beschriebenen Drehmomentwandler entspricht. Es ist daher hinsichtlich des grundsätzlichen Aufbaus auf die vorangehenden Ausführungen zu verweisen. Man erkennt jedoch hier, dass der radial innen liegende zweite Torsionsschwingungsdämpferbereich 66 mit den beiden vorangehend auch bereits erläuterten Torsionsschwingungsdämpfereinheiten 66' und 66" in axialer Staffelung ausgebildet ist. Der Eingangsbereich 78' der Torsionsschwingungsdämpfereinheit 66' umfasst ein ringartig ausgebildetes und die Funktionalität eines Zentralscheibenelements übernehmendes Bauteil 130, das radial innen durch Nietbolzen 132 mit den beiden Deckscheibenelementen 74, 77 und auch der Turbinenradschale 30 fest verbunden ist. Dabei stellen die beiden Deckscheibenelemente 74, 77 in ihrem radial inneren Bereich den Eingangsbereich 78" der Torsionsschwingungsdämpfereinheit 66" bereit.

Ein weiteres beispielsweise ebenfalls als Blechformteil ausgebildetes Bauteil 132 umgreift die Dämpferfedereinheiten 84' U-förmig und ist radial innen mit der Turbinenradnabe 36 und dem Zentralscheibenelement 80 durch Nietbolzen 134 fest verbunden. Während das Bauteil 132 im Wesentlichen den Ausgangsbereich 82' der Torsionsschwingungsdämpfereinheit 66' bereitstellt, stellt das Zentralscheibenelement 80 im Wesentlichen den Ausgangsbereich 82" der Torsionsschwingungsdämpfereinheit 66" bereit.

Man erkennt hier eine besonders effektive Ausnutzung des insgesamt zur Verfügung stehenden Bauraums, da einerseits der erste Torsionsschwingungsdämpferbereich 64 und die Torsionsschwingungsdämpfereinheit 66" des zweiten, radial inneren Torsionsschwingungsdämpferbereichs 66 direkt radial gestaffelt angeordnet sind und auf gleichem Axialniveau liegen. Die beiden Torsionsschwingungsdämpfereinheiten 66' und 66" liegen wieder axial unmittelbar einander benachbart und näherungsweise auf gleichem radialen Niveau. Unmittelbar radial außerhalb der Torsionsschwingungsdämpfereinheit 66' liegt die Überbrückungskupplungsanordnung 42 mit ihren Reibelementen 48, 50. Hier wird nicht nur eine besonders bauraumeffiziente Anordnung der Torsionsschwingungsdämpfereinheit 66' erreicht, sondern auf Grund von deren Anordnung vergleichsweise weit radial innen ist die Fliehkraftbelastung ebenfalls gering mit der Folge einer sehr guten Entkopplungsqualität.

Insofern, als im vorliegenden Text davon die Rede ist, dass die Turbinenradschale bzw. Turbinenradschaufeln an einen Eingangsbereich bzw. einen Ausgangsbereich angebunden sind, ist dies so zu verstehen, dass hier entweder eine direkte Verbindung z.B. durch Annieten, eine integrale Verbindung durch integrale Ausgestaltung in einem einzigen Bauteil oder aber auch eine mittelbare Verbindung unter Einsatz eines eine Verbindungswirkung herstellenden zusätzlichen Bauteils vorgesehen sein kann.

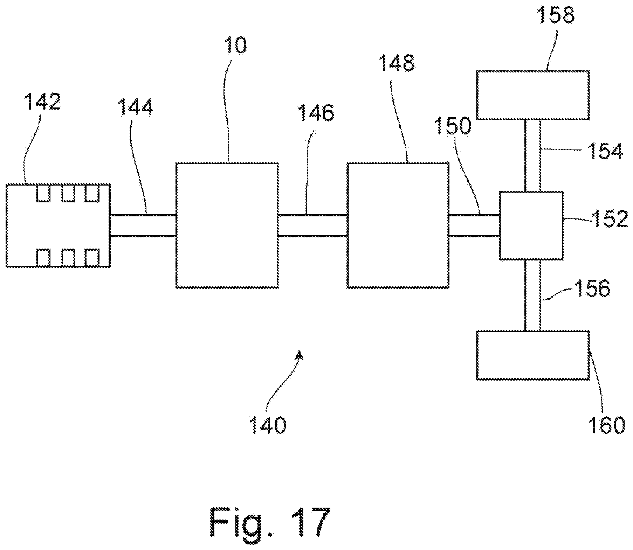

Die Fig. 17 zeigt in prinzipartiger Darstellung ein Antriebssystem 140 für ein Fahrzeug. Man erkennt eine Brennkraftmaschine 142, die über ihre Antriebswelle 144, also ihre Kurbelwelle, an eine hydrodynamische Kopplungseinrichtung 10, beispielsweise wie vorangehend beschrieben, angekoppelt ist. Der Abtrieb aus der hydrodynamischen Kopplungseinrichtung 10, also beispielsweise einem Drehmomentwandler, erfolgt über eine Getriebeeingangswelle 146 zu einem beispielsweise als automatisches Getriebe ausgebildeten Getriebe 148. Dessen Ausgangswelle 150 leitet das Drehmoment zu einem Differenzial 152 weiter. Das Differenzial 152 verteilt das zu übertragende Drehmoment über Radantriebswellen 154, 156 auf die beiden angetriebenen Räder 158, 160. Die verschiedenen Baugruppen, welche Drehmomente übertragen, insbesondere auch die hier als Wellen 144, 146, 150, 154 und 156 ausgebildeten Baugruppen, tragen auf Grund ihrer mehr oder weniger stark ausgeprägten Drehelastizität zum Entstehen von Schwingungen, vor allem Lastwechselschwingungen im niederen Frequenzbereich bei. Derartige Lastwechselschwingungen machen sich in einem Fahrzeug durch ausgeprägte Längsbeschleunigungsschwankungen bemerkbar. Werden insbesondere die Radialantriebswellen 154, 156 jedoch zu drehsteif ausgelegt, entstehen Geräuschprobleme, da vor allem hochfrequente Schwingungen, die nicht ausreichend in einem Torsionsschwingungsdämpfer herausgefiltert werden können, auf die Aufhängung bzw. Karosserie übertragen werden. Dies führt zu einem im Fahrzeuginnenraum wahrnehmbaren Brummen.

Um diesen Problemen entgegenzutreten, ist bevorzugt vorgesehen, die Radantriebswellen 154, 156 mit definierter Torsionssteifigkeit auszubilden, bei welcher sich gezeigt hat, dass hinsichtlich des Vermeidens von Lastwechselschwingungen einerseits und hinsichtlich des Vermeidens einer Übertragung hochfrequenter Schwingungen auf die Karosserie andererseits ein guter Kompromiss erzielt werden kann. Insbesondere wird vorgeschlagen, dass eine Gesamtsteifigkeit G, welche durch die beiden Radantriebswellen 154, 156 bereitgestellt wird, die Bedingung erfüllt:

$$G = A \times z \ [Nm/°],$$

wobei

A = eine Zahl im Bereich von 30 bis 70, vorzugsweise 40 bis 50, ist

z = die Anzahl der Zylinder der Brennkraftmaschine 142 ist.

Bei Auslegung der Steifigkeit in diesem Bereich wird unter Berücksichtigung der Zylinderzahl der Brennkraftmaschine 142 und somit der Anregungsfrequenz vor allem hochfrequenter Schwingungen sowohl das Auftreten von Lastwechselschwingungen, als auch das Übertragen hochfrequenter Geräusche in die Karosserie weitestgehend vermieden.

Es sei darauf hingewiesen, dass selbstverständlich bei einem erfindungsgemäß aufgebauten Antriebssystem bzw. einer erfindungsgemäßen hydrodynamischen Kopplungseinrichtung die vorangehend beschriebenen Aspekte beliebig kombiniert werden können. So können selbstverständlich auch bei vier in Serie geschalteten Torsionsschwingungsdämpferbereichen einer oder mehrere davon mit zwei oder mehr parallel wirkenden Torsionsschwingungsdämpfereinheiten ausgebildet sein. Unabhängig davon, wie viele Torsionsschwingungsdämpferbereiche bzw. Torsionsschwingungsdämpfereinheiten bei den einzelnen Bereichen vorgesehen sind, können diese, den Prinzipien der Fig.

3 folgend mit Dämpferfedereinheiten mit mehreren seriell geschalteten Dämpferfedern ausgebildet sein.

Nachfolgend werden mit Bezug auf die Fig. 18 bis 29 verschiedene Möglichkeiten erläutert, mit welchen insbesondere im Bereich des ersten Torsionsschwingungsdämpferbereichs 64, also des radial äußeren Torsionsschwingungsdämpferbereichs, dessen Dämpferfedereinheiten im Rotationsbetrieb vergleichsweise starken Fliehkrafteinflüssen ausgesetzt sind, dafür gesorgt werden kann, dass diese Fliehkrafteinflüsse nicht eine übermäßig starke und die Entkopplungsgüte beeinträchtigende Wechselwirkung zwischen den ersten Dämpferfedereinheiten 76 und einer diese nach radial außen stützenden Abschlussfläche erzeugen. Bei dem in Fig. 1 dargestellten Ausgestaltungsbeispiel wird eine derartige Abschlussfläche 860 bereitgestellt durch einen die ersten Dämpferfedereinheiten 76 radial außen und axial zumindest teilweise übergreifenden radial äußeren Bereich des Deckscheibenelements 77, also des ersten Ausgangsbereichs 72 des ersten Torsionsschwingungsdämpferbereichs 64. Es sei hier darauf hingewiesen, dass selbstverständlich eine derartige Abschlussfläche 860 auch bereitgestellt werden könnte durch das andere Deckscheibenelement 74 bzw. durch beide einander gegenläufig radial außen und in axialer Richtung teilweise um die ersten Dämpferfedereinheiten 76 erstreckende Deckscheibenelemente 74, 77.

Man erkennt in der Fig. 18 den radial äußeren, ersten Torsionsschwingungsdämpferbereich 64 bzw. eine Dämpferfedereinheit 76 desselben, die im dargestellten Beispiel eine Schraubendruckfeder 880 umfasst. Dieser sind an den beiden Deckscheibenelementen 74, 77 nicht erkennbare Umfangsabstützbereiche 1180 zugeordnet, die durch in Fig. 1 mit Strichlinie beim Deckscheibenelement 77 angedeutete Einformungen bereitgestellt sein können. Das Zentralscheibenelement 70 weist in Zuordnung zu diesen Umfangsabstützbereichen nach radial außen greifende Abstützarme 900 auf, und zwischen jeweils zwei derartigen Abstützarmen 900 ist eine erste Dämpferfedereinheit 76 unter Vorspannung gehalten. Der Umfangsabstand der Abstützarme 900 entspricht vorzugsweise dem Umfangsabstand der an den beiden Deckscheibenelementen 74, 77 vorgesehenen Umfangsabstützbereiche, so dass unabhängig von der Relativdrehrichtung des ersten Eingangsbereichs 68 bezüglich des ersten Ausgangsbereichs 72 die ersten Dämpferfedereinheiten 76 auch bei bereits kleinsten Auslenkungen wirksam werden können.

An den Abstützarmen 900 sind in die Umfangsendbereiche 920, 940 einer jeweiligen ersten Dämpferfedereinheit 76, hier also der Schraubendruckfeder 880, eingreifende Radialhaltevorsprünge 960 ausgebildet. Diese sind auf den Innendurchmesser der Schraubendruckfeder 960 so abgestimmt, dass bei in einen jeweiligen Endbereich 920, 940 eingreifendem Radialhaltevorsprung 960 der radial innere Windungsbereich am jeweiligen Umfangsende 920, 940 nach radial außen an dem jeweiligen Radialhaltevorsprung 960 anliegt und mithin in diesem Umfangsendbereich 920 bzw. 940 die erste Dämpferfedereinheit 76 sich nicht weiter nach radial außen verlagern kann. Auf diese Art und Weise wird dafür gesorgt, dass in einem mit einem jeweiligen Abstützarm 900 zusammenwirkenden Endbereich 920 bzw. 940 die ersten Dämpferfedereinheiten 76 auch bei Fliehkraftbelastung sich nicht oder nur mit durch die Radiallage des jeweiligen Radialhaltevorsprungs 960 definiertem Ausmaß gegen die Abschlussfläche 860 anlegen können. Dies bedeutet, dass bei Relativdrehung zwischen dem ersten Eingangsbereich 68 und dem ersten Ausgangsbereich 72 derjenige Umfangsendbereich 900 oder 920, welcher in Umfangsrichtung an einem Abstützarm 900 abgestützt ist und sich somit bezüglich der Abschlussfläche 860 in Umfangsrichtung bewegen wird, nicht durch übermäßig starke Reibwechselwirkung bezüglich dieser Abschlussfläche 860 der Relativdrehung entgegenwirkt.

Um bei Lastwechseln das Herstellen der Radialabstützwirkung zwischen den jeweiligen Umfangsendbereichen 920, 940 und den Abstützarmen 900 bzw. den Radialabstützvorsprüngen 960 herzustellen, können diese mit Einführschrägen ausgebildet sein. In dem zwischen den Umfangsendbereichen 920, 940 liegenden Mittenbereich 980 legt sich die Schraubendruckfeder 880 einer jeweiligen ersten Dämpferfedereinheit 76 nach radial außen gegen die Abschlussfläche 860 an.

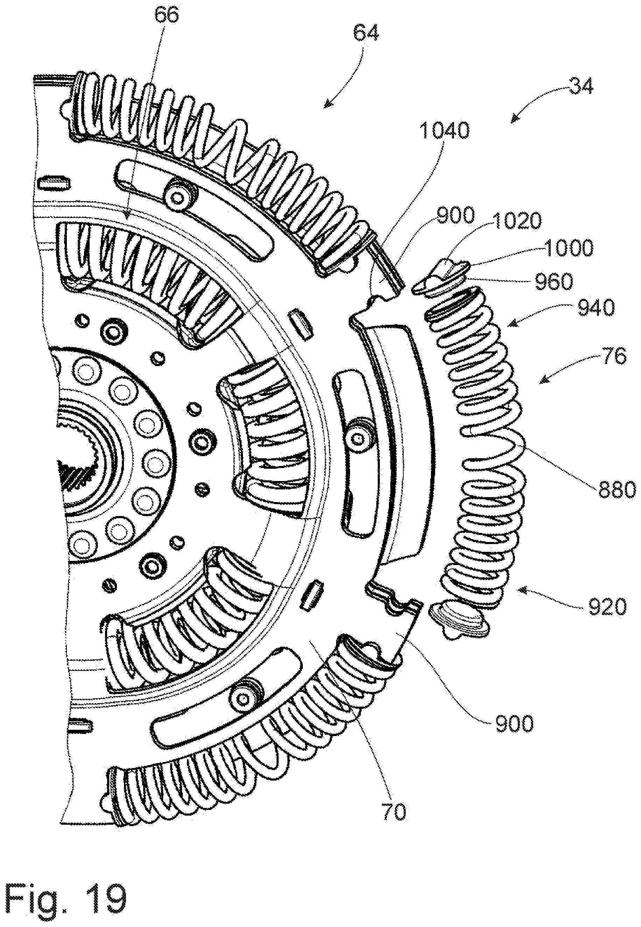

Eine alternative Ausgestaltungsvariante hierzu ist in Fig. 19 gezeigt. Man erkennt wieder die ersten Dämpferfedereinheiten 76, jede umfassend eine Schraubendruckfeder 880. Diese ist in ihren Umfangsendbereichen 920, 940 nicht mehr unmittelbar an den Abstützarmen 900 abgestützt. Vielmehr sind tellerartige Abstützelemente 1000 vorgesehen. Diese greifen mit einem hier im Wesentlichen zylindrisch ausgebildeten Radialabstützvorsprung 960 in den jeweiligen Umfangsendbereich 920, 940 ein und weisen einen Radialsicherungsvorsprung 1020 auf, der in eine entsprechende Aussparung 1040 an einem jeweils zugeordneten Abstützarm 900 eingreift und somit bezüglich diesem in radialer Richtung formschlüssig gehalten ist. Auf diese Art und Weise wird zusätzlich eine verbesserte Umfangsabstützwirkung für die Schraubendruckfedern 880 in ihren Umfangsendbereichen 920, 940 sichergestellt.

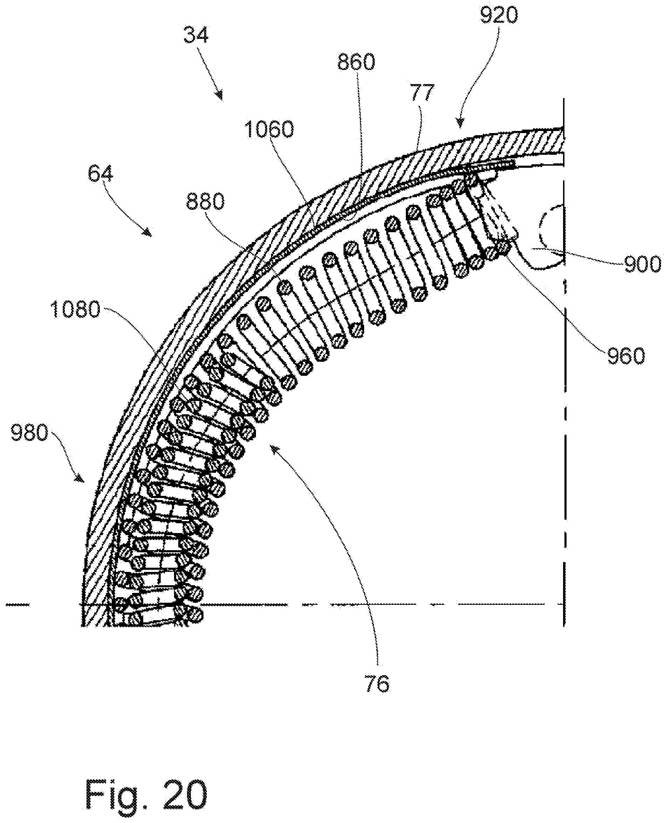

In Fig. 20 ist eine Variante gezeigt, bei welcher die ersten Dämpfedereinheiten 76 in ihren Umfangsendbereichen 920 bzw. 940 wieder durch an den Abstützarmen 900 vorgesehene Radialabstützvorsprünge 960 gegen Bewegung nach radial außen gesichert sind. Zusätzlich erkennt man, dass die ersten Dämpferfedereinheiten 76 bzw. die Schraubendruckfedern 880 derselben so gekrümmt bzw. vorgekrümmt sein können, dass sie sich bei fehlender Fliehkraftbelastung bzw. auch fehlender Umfangsbelastung zumindest in bzw. nahe den Umfangsendbereichen 920, 940 mit Abstand zur Abschlussfläche 860 erstrecken. Die Reibwechselwirkung mit der Abschlussfläche 860 kann weiter dadurch noch gemindert werden, dass an dem Deckscheibenelement 70 ein beispielsweise aus Kunststoffmaterial, also einem Material mit bezüglich der allgemein aus Metall aufgebauten Federn geringem Reibkoeffizienten, ausgebildetes Einlageteil 1060 vorgesehen ist, welches dann an seiner Innenumfangsfläche die Abschlussfläche 860 bereitstellt, gegen welche die Dämpferfedereinheit 76 in ihrem Umgangsmittenbereich 980 sich anlegt.

Man erkennt in Fig. 20 weiter, dass in der Schraubendruckfeder 880 eine weitere Schraubendruckfeder 1080 angeordnet ist, die hier mit kürzerer Umfangserstreckung als die Schraubendruckfeder 880 ausgebildet ist. Hier kann also eine im Belastungsfall gestaffelte Wirksamkeit der ersten Dämpferfedereinheiten 76 dadurch erreicht werden, dass zunächst die in Umfangsrichtung längere und radial äußere Schraubendruckfeder 880 komprimiert wird und erst bei Erreichen eines bestimmten Kompressionsgrades dann auch die Schraubendruckfeder 1080 wirksam wird. Auch das dadurch eingeführte vergrößerte Gesamtfedervolumen erhöht die Entkopplungsqualität des radial äußeren ersten Torsionsschwingungsdämpferbereichs 64.

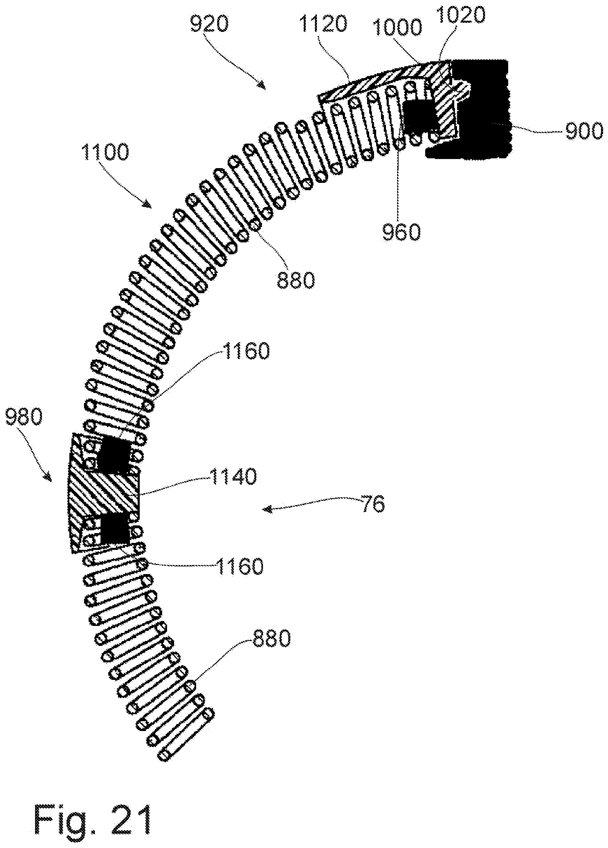

In Fig. 21 ist eine Ausgestaltungsvariante gezeigt, bei welcher die ersten Dämpferfedereinheiten 76 mit beispielsweise zwei in Umfangsrichtung aufeinander folgenden Schraubendruckfedern 880 ausgebildet sind. Selbstverständlich könnten in diesen auch die in Fig. 20 gezeigten Schraubendruckfedern 1080 angeordnet sein. Man erkennt zunächst, dass auch hier in dem Umfangsendbereich 920 bzw. dem nicht dargestellten Umfangsendbereich 940 einer jeweiligen Dämpferfedereinheit 76 die Abstützung bezüglich der Abstützarme 900 über Abstützelemente 1000 erfolgt, die in radialer Richtung formschlüssig mit den Abstützarmen 900 eingreifen. An jedem Abstützelement 1000 ist wieder ein Radialabstützvorsprung 960 vorgesehen, welcher in einem jeweiligen Umfangsendbereich 920 bzw. 940 den radial innen liegenden Windungsbereich der Federn 880 gegen Bewegung nach radial außen stützt. Zusätzlich erkennt man, dass der Windungsdurchmesser der Federn 880 an einem jeweiligen Umfangsendbereich (hier 920) gezeigt, kleiner ist, als der Windungsdurchmesser der Federn 880 in einem von dem Umfangsendbereich weiter entfernt liegenden Bereich 1100. Im dargestellten Ausgestaltungsbeispiel ist die Ausgestaltung der Federn 880 so, dass die Längsmittenachse am Umfangsendbereich 920 bezüglich der Längsmittenachse am Bereich 1100 nach radial innen verschoben ist, die inneren Windungsbereiche am Umfangsendbereich 920 also näherungsweise auf gleichem radialen Niveau liegen, wie am Bereich 1100, während die äußeren Windungsbereiche nach innen versetzt liegen. Auch dies führt zu einem vergrößerten Abstand zu der hier nicht gezeigten Abschlussfläche 860 und verhindert oder mindert zumindest die Reibwechselwirkung mit der Abschlussfläche 860.

Wie die Fig. 21 dies zeigt, kann zusätzlich zu dieser Durchmesserverringerung der Schraubendruckfeder 880 am Abstützelement 1000 ein diese radial außen übergreifender Radialhalteabschnitt 1120 vorgesehen sein. Dieser kann hier in besonders vorteilhafter Weise deshalb vorgesehen sein, da die Schraubendruckfeder 880 bzw. die erste Dämpferfedereinheit 76 in ihrem Umfangsendbereich 920 eine radialen Platz für den Radialhalteabschnitt 1120 schaffende Durchmesserverringerung aufweist. Dieser Radialhalteabschnitt 1120 sorgt zusätzlich dafür, dass vor allem auch bei vergleichsweise starken Fliehkraftbelastungen die erste Dämpferfedereinheit 76 in einem jeweiligen Umfangsendbereich 920 bzw. 940 nicht in Reibwechselwirkung mit der Abschlussfläche 860 kommen kann.

Zwischen den beiden Schraubendruckfedern 880 der ersten Dämpferfedereinheit 76 ist ein Abstützelement 1140 erkennbar, an welchem die im Umfangsmittenbereich der Dämpfedereinheit 76 liegenden Enden der Schraubendruckfeder 880 bezüglich einander abgestützt sind und die Dämpferfedereinheit 76 nach radial außen bezüglich der Abschlussfläche 860 geführt ist. Auch in diesen Endbereichen können die Schraubendruckfedern 880 eine Verringerung des Außendurchmessers aufweisen, vorzugsweise in einer Art, wie sie auch in dem Umfangsendbereich 920 gezeigt ist. Ferner können an dem Abstützelement 1140 ebenfalls für die beiden Schraubendruckfedern 880 Radialabstützvorsprünge 1160 vorgesehen sein, die eine identische Funktionalität aufweisen, wie die im Bereich der Umfangsenden 920, 940 wirksamen Radialabstützvorsprünge 960.

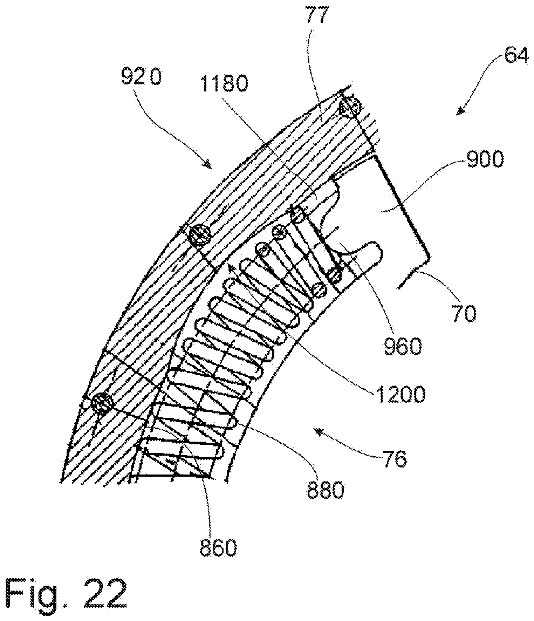

Bei der in Fig. 22 gezeigten Variante weisen die Abstützarme 900 wiederum die Radialabstützvorsprünge 960 auf. Hier ist ein Beispiel dargestellt, bei welchem in dem hier gezeigten drehmomentenfreien Zustand ein Umfangsendbereich 920 der ersten Dämpferfedereinheit 76 in Abstand zum Abstützarm 900 liegt und sich lediglich an Umfangsabstützbereichen 1180 der Deckscheibenelemente 74, 77 abstützt. Hier ist also ein gewisser Relativdrehwinkel vorgesehen, in welchem die ersten Dämpferfedereinheiten 76 nicht wirksam sind.

Weiter erkennt man, dass die Abschlussfläche 860, die im größten Bereich ihrer Umfangserstreckung eine bezüglich der Drehachse A kreisrunde Oberfläche bereitstellt, eine nach radial außen gerichtete Ausbauchung 1200 aufweist, und zwar ausgehend vom Umfangsabstützbereich 1180, an welchem der Umfangsendbereich 920 im drehmomentenfreien Zustand abgestützt ist. Tritt eine Relativdrehung auf, welche dazu führt, dass der in Fig. 22 erkennbare Abstützarm 900 sich auf den Umfangsendbereich 920 der ersten Dämpferfedereinheit 76 bzw. der Schraubendruckfeder 880 zu bewegt und diese zur Bewegung in Umfangsrichtung mitnimmt, so ist auf Grund der Ausbauchung 1200 eine Reibwechselwirkung zwischen der Schraubendruckfeder 880 und der Abschlussfläche 860 im Umfangsendbereich 920 nicht möglich. Dies wird dadurch noch unterstützt, dass auch hier der Abstützarm 900 den Radialabstützvorsprung 960 aufweist.

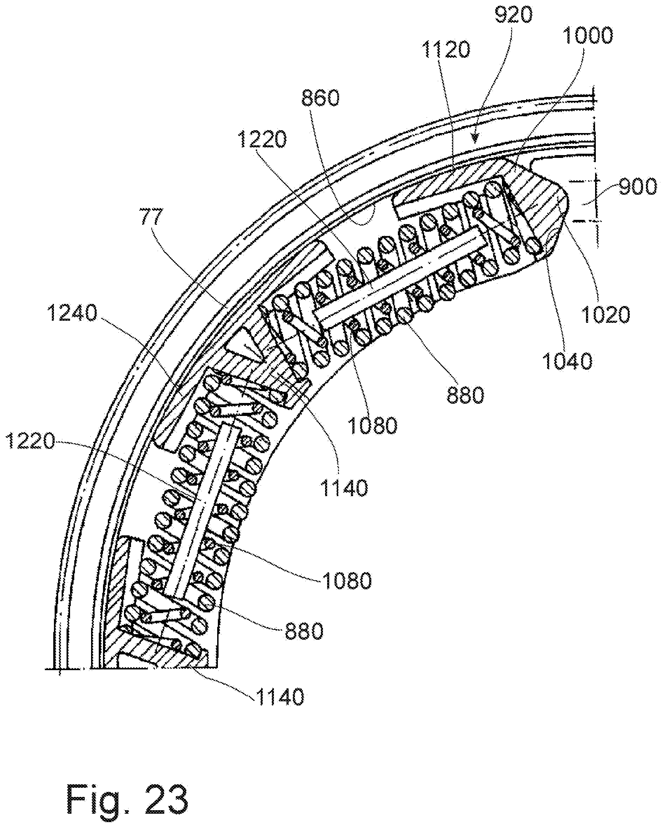

Die Fig. 23 zeigt eine Ausgestaltungsform, bei welcher die ersten Dämpferfedereinheiten 76 wieder eine Mehrzahl von in Umfangsrichtung aufeinander folgenden Schraubendruckfedern 880 aufweisen, die in ihren einander zugewandten Umfangsenden über Abstützelemente 1140 in Umfangsrichtung aneinander und nach radial außen bezüglich der Abschlussfläche 860 abgestützt sind. Beispielsweise kann hier die Ausgestaltung so sein, dass insgesamt zwei erste Dämpferfedereinheiten 760 vorgesehen sind, die in Umfangsrichtung aufeinander folgend jeweils vier Schraubendruckfedern 880 und mithin drei Abstützelemente 1140 umfassen. An den Umfangsendbereichen, von welchen hier wieder der Endbereich 920 erkennbar ist, sind die ersten Dämpferfedereinheiten 76 wieder über Abstützelemente 1000 bezüglich der Abstützarme 900 und selbstverständlich auch bezüglich entsprechender Abstützbereiche der beiden Deckscheibenelemente in Umfangsrichtung abgestützt, wobei hier auch wieder ein in radialer Richtung wirksamer Formschlusseingriff bestehen kann.

Man erkennt, dass in jeder Schraubendruckfeder 880 eine hier gleichlang wie diese ausgestaltete Schraubendruckfeder 1080 angeordnet ist. Innerhalb jeder dieser Schraubendruckfedern 1080 ist ein stangenartiges Radialabstützelement 1220 angeordnet, dessen Erstreckungslänge kürzer ist, als diejenige der jeweils zugeordneten Schraubendruckfedern 880, 1080. Diese stangenartigen Radialabstützelemente 1220 erfüllen zwei Funktionen. Zum einen definieren sie die maximale Kompression der Schraubendruckfedern 880, 1080, indem sie bei Erreichen einer bestimmten Kompression in Anlage an jeweiligen Abstützelementen 1000 bzw. 1140 kommen und mithin eine weitere Kompression nicht mehr zulassen. Auf Grund ihrer Biegefestigkeit erfüllen sie weiterhin die Funktion, die Schraubendruckfedern 880 bzw. 1080 gegen Verformung nach radial außen zu stützen, insbesondere bei vergleichsweise großen Fliehkräften. Eine ungünstige Reibwechselwirkung bezüglich der Abschlussfläche 860 und auch bezüglich der Radialhalteabschnitte 1120 an den Abstützelementen 1000 bzw. entsprechenden Radialhalteabschnitten 1240 an den Abstützelementen 1140 kann somit vermieden werden.

Es sei darauf hingewiesen, dass die Funktionalität dieser hier stangenartig ausgebildeten Radialabstützelemente 1220 auch durch die inneren Schraubendruckfedern 1080 erfüllt werden kann. Dazu können diese beispielsweise mit einer Erstreckungslänge ausgebildet sein, die kürzer ist, als die Erstreckungslänge der Schraubendruckfedern 880, wie beispielsweise in Fig. 20 gezeigt, und können so ausgestaltet sein, dass sie eine vergleichsweise hohe Biegesteifigkeit aufweisen. Zusätzlich zu der dann gestuften Wirksamkeit der beispielsweise in den Schraubendruckfedern 880 schwimmend aufgenommenen Schraubendruckfedern 1080 stützen diese dann die Schraubendruckfedern 880 gegen unter Fliehkrafteinwirkung auftretende Ausbauchungen nach radial außen.

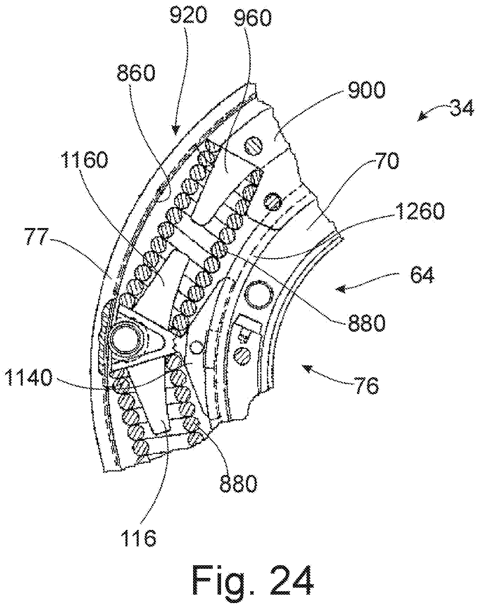

Die Fig. 24 zeigt eine Ausgestaltungsvariante, bei welcher eine erste Dämpferfedereinheit 76 mehrere in Umfangsrichtung aufeinander folgende Schraubendruckfedern 880 umfasst. Auch hier kann beispielsweise jede dieser Dämpferfedereinheiten 76 zwei, drei oder vier derartige Schraubendruckfedern 880 aufweisen. In ihren Umfangsendbereichen 920 bzw. dem hier nicht gezeigten Endbereich 940 sind die ersten Dämpferfedereinheiten 76 an den Abstützarmen 900 des Zentralscheibenelements 70 abgestützt, wobei hier eine Sicherung nach radial außen durch einen jeweiligen Radialabstützvorsprung 960 realisiert ist. Weiterhin sind die Schraubendruckfedern 880 so ausgebildet bzw. vorgeformt, dass sie im unbelasteten oder gering belasteten Zustand nach radial innen vorgekrümmt sind. Eine auftretende Fliehkraftbelastung führt insbesondere auch bei Kompression der Schraubendruckfedern 880 dann dazu, dass diese zunehmend sich einer linearen bzw. tangentialen Erstreckung annähern, sich jedoch nicht so weit nach radial außen verformen können, dass sie sich gegen die Abschlussfläche 860 anlegen.

Die zwischen einzelnen Schraubendruckfedern 880 wirksamen Abstützelemente 1140 weisen ebenfalls Radialabstützvorsprünge 1160 auf und sind bei der hier gezeigten Ausgestaltungsvariante nicht radial an der Abschlussfläche 860 geführt bzw. abgestützt. Vielmehr sind die einander jeweils entsprechenden Abstützelemente 1140 zweier oder mehrerer erster Dämpferfedereinheiten 76 über ein ringartiges Verbindungselement 1260 miteinander verbunden, das nicht nur die gemeinsame Umfangsbewegung einander entsprechender Abstützelemente 1140 sicherstellt, sondern auch deren Radialabstützung übernimmt, ohne eine Reibwechselwirkung zur Abschlussfläche 860 zu erzeugen.

Es sei hier darauf hingewiesen, dass selbstverständlich bei einer derartigen Ausgestaltungsform auch weitergehende, die radiale Stützung oder Halterung der ersten Dämpferfedereinheiten 76 übernehmende Maßnahmen, wie beispielsweise die Radialhalteabschnitte oder die Radialabstützelemente, der vorangehend beschriebenen Ausgestaltungsformen vorgesehen sein können. Weiter sei hier darauf hingewiesen, dass bei dieser Ausgestaltungsform die Abschlussfläche 860 im Wesentlichen die Funktion eines geometrischen Abschlusses des ersten Torsionsschwingungsdämpferbereichs 64 bzw. der Torsionsdämpferanordnung 34 nach radial außen aufweist. Eine Führungs- bzw. Radialabstützfunktion beispielsweise auch für die zwischen einzelnen Schraubendruckfedern 880 wirkenden Abstützelemente 1140 ist hier nicht vorgesehen. Insofern könnte bei einer derartigen Ausgestaltung die Torsionsdämpferanordnung 34 bzw. der radial äußere Torsionsschwingungsdämpferbereich 64 auch offen, also ohne derartige Abschlussfläche 860 bzw. entsprechend verlängerten Bereich des Deckscheibenelements 77 ausgebildet sein, wenngleich in diesem Falle zumindest dort, wo an den Deckscheibenelementen 74, 77 Umfangsabstützbereiche für die ersten Dämpferfedereinheiten 76 vorgesehen sind, dafür gesorgt sein muss, dass dort auch eine Halterung der ersten Dämpferfedereinheiten 76 gegen Bewegung nach radial außen sichergestellt ist, insbesondere dann wenn bei Relativdrehung zwischen dem ersten Eingangsbereich 68 und dem ersten Ausgangsbereich 72 eine Wechselwirkung der ersten Dämpferfedereinheiten 76 in einem jeweiligen Umfangsendbereich 920 oder 940 nur mit den Deckscheibenelementen 74, 77 vorhanden ist. In diesem Falle könnte also im Sinne der vorliegenden Erfindung die Abschlussfläche in Umfangsrichtung bereitgestellt sein aus einer Mehrzahl diskreter Abschlussflächenbereiche dort, wo die Deckscheibenelemente 74, 76 die Umfangsabstützbereiche für die ersten Dämpferfedereinheiten 76 bereitstellen. Wenn dort durch andere Maßnahmen, beispielsweise durch Radialabstützvorsprünge, wie sie vorangehend bereits beschrieben wurden, für eine entsprechende radiale Sicherung auch an den Deckscheibenelementen gesorgt ist, kann auf eine Abschlussfläche vollständig verzichtet werden, da die ersten Dämpferfedereinheiten dann sowohl am ersten Eingangsbereich 68, als auch am ersten Ausgangsbereich 72 als auch ggf. in Zwischenbereichen zwischen jeweiligen Umfangsendbereichen in radialer Richtung gestützt sind, ohne hierfür zusätzliche Maßnahmen, wie beispielsweise die Abschlussfläche zu benötigen.

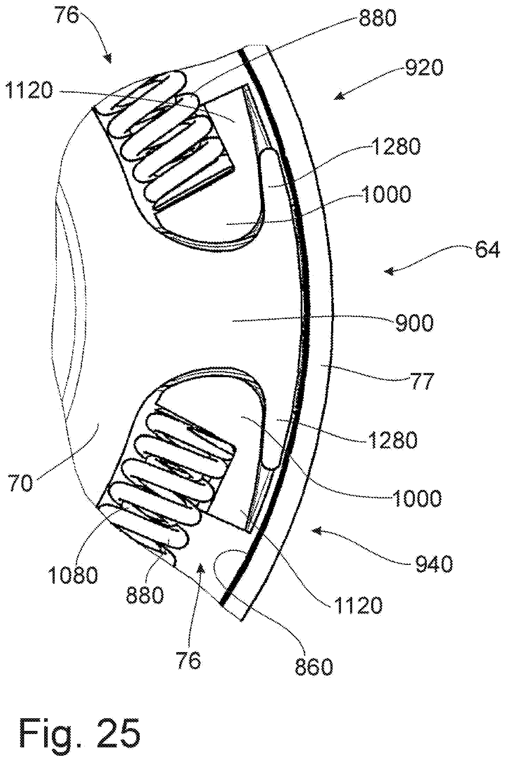

Die Fig. 25 zeigt einen Umfangsbereich eines ersten Torsionsschwingungsdämpferbereichs 64, in welchem die beiden Umfangsendbereiche 920, 940 zweier erster Dämpferfedereinheiten 76 bezüglich eines Abstützarms 900 des Deckscheibenelements 70 abgestützt sind und zwar über jeweilige Abstützelemente 1000. In Zuordnung zu diesen Abstützelementen 1000 weist der Abstützarm 900 in Umfangsrichtung sich erstreckende und zur Abschlussfläche 860 in radialem Abstand liegende Haltevorsprünge 1280 auf. Diese sichern die Abstützelemente 1000 mit den daran jeweils vorgesehenen Radialhalteabschnitten 1120 und somit auch die Umfangsendbereiche 920, 940 gegen Verlagerung nach radial außen. Da bei derartiger Ausgestaltung der Abstützelemente 1000 die Umfangsendbereiche 920, 940 bereits durch die Radialhalteabschnitte 1120 gegen Bewegung nach radial außen gesichert sind, ist es nicht unbedingt erforderlich, die vorangehend erläuterten Abstützabschnitte 960 vorzusehen.

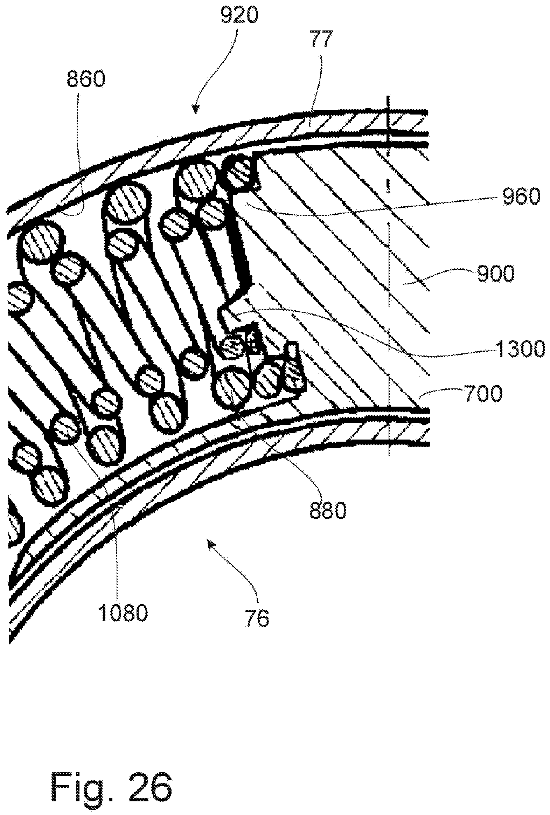

Die Fig. 26 zeigt eine Ausgestaltungsvariante, bei welcher die ersten Dämpferfedereinheiten 76 in ihren Umfangsendbereichen, von welchen hier ein Umfangsendbereich 920 gezeigt ist, unmittelbar an Abstützarmen 900 abgestützt sind. Die Dämpferfedereinheiten 76 sind hier wieder mit den radial ineinander geschachtelten Schraubendruckfedern 880, 1080 ausgebildet, und in Zuordnung zu jeder dieser Schraubendruckfedern 880, 1080 ist ein eigenständig wirkender Radialabstützvorsprung 960 bzw. 1300 vorgesehen. Der für die mit größerem Durchmesser ausgebildete Schraubendruckfeder 880 vorgesehene Radialabstützvorsprung 960 kann hier zylinderartig gebildet sein und somit das Umfangsende dieser Feder im Wesentlichen vollständig ausfüllen. Von diesem Abschnitt erstreckt sich dann der Radialabstützabschnitt 1300 noch weiter in die mit kleinerem Durchmesser ausgebildete und sich in Umfangsrichtung am Radialabstützvorsprung 960 abstützende Schraubendruckfeder 1080 hinein, wobei hier ein am radial inneren Windungsbereich angreifender nasenartiger Vorsprung vorgesehen ist. Auch hier könnte selbstverständlich ein entsprechender mit kleinerem Durchmesser ausgebildeter zylindrischer Vorsprung vorhanden sein.

Durch diese separate Halterung der Umfangsenden der beiden ineinander geschachtelten Schraubendruckfedern 880, 1080 wird vor allem unter Fliehkrafteinflüssen auch eine übermäßige reibmäßige Wechselwirkung zwischen diesen Schraubendruckfedern 880, 1080 vermieden und somit die Entkopplungsqualität weiter verbessert.

Hier könnte beispielsweise vorgesehen sein, dass für die äußere Schraubendruckfeder 880 an Stelle des hier zugeordneten Radialabstützvorsprungs 960 am Abstützarm 900 oder einem daran möglicherweise sich abstützenden Abstützelement, wie es vorangehend bereits erläutert wurde, ein die Schraubendruckfeder 880 radial außen übergreifender Radialhalteabschnitt 1120 vorgesehen ist, wie er beispielsweise in Fig. 25 erkennbar ist, so dass die äußere Schraubendruckfeder 880 von außen gehalten wird, während die innere Schraubendruckfeder von innen gehalten wird.

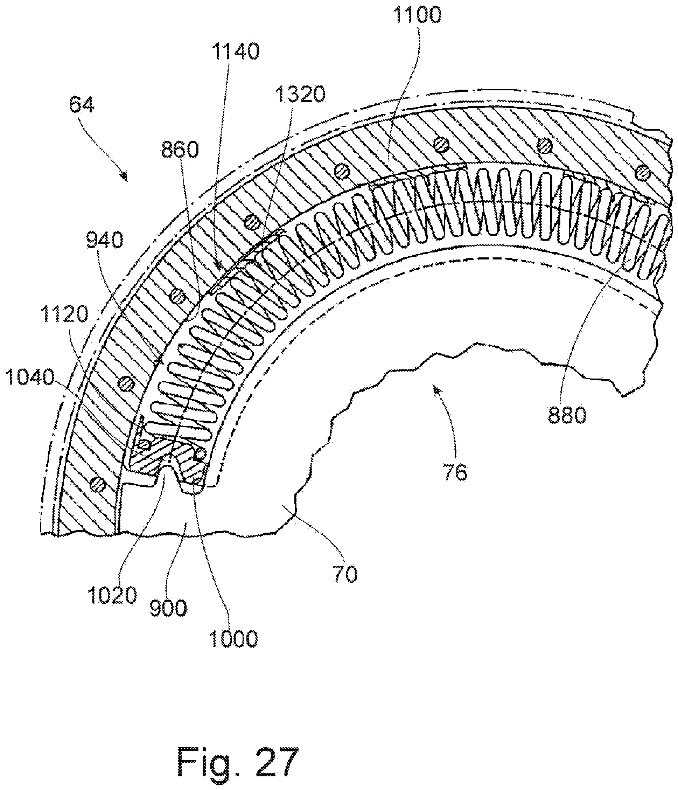

In Fig. 27 ist eine Ausgestaltungsvariante gezeigt, bei welcher die ersten Dämpferfedereinheiten 76 des radial äußeren ersten Torsionsschwingungsdämpferbereichs 64 beispielsweise eine einzige in Umfangsrichtung vergleichsweise langgestreckte Schraubendruckfeder 880 aufweisen. Diese kann an ihren Umfangsendbereichen, hier ist der Umfangsendbereich 940 erkennbar, über Abstützelemente 1000 in der vorangehend beschriebenen Art und Weise bezüglich der Abstützarme 900 abgestützt sein. Auf diese Art und Weise sind in den Umfangsendbereichen die Schraubendruckfedern 880 in radialem Abstand zur Abschlussfläche 860 gehalten. Auf Grund der langen Ausgestaltung der Schraubendruckfedern 880 werden diese sich jedoch zumindest dann, wenn Fliehkräfte auftreten, in von den Umfangsendbereichen 940 bzw. auch 920 weiter entfernt liegenden Bereichen 1100 nach radial außen gegen die Abschlussfläche 860 anlegen, was zu ungünstigen Reibwechselwirkungen führen kann. Um dies zu vermeiden, sind an die beispielsweise auch vorgekrümmt ausgebildeten Schraubendruckfedern 880 ein oder mehrere als Gleitelemente 1320 wirksame Abstützelemente 1140 angeklipst. Diese mit bezüglich der Abschlussfläche 860 mit geringem Reibkoeffizienten, beispielsweise aus Kunststoffmaterial, ausgebildeten Gleitelemente 1320 verhindern eine unmittelbare Reibwechselwirkung zwischen der Abschlussfläche 860 und den Schraubendruckfedern 880. Es sei darauf hingewiesen, dass diese Abstützelemente 1140 auch so ausgebildet sein können, dass sie sich rollend entlang der Abschlussfläche 860 bewegen oder dass fliehkraftabhängig ein Umschalten zwischen einer Rollbewegung und einer Gleitbewegung stattfindet.

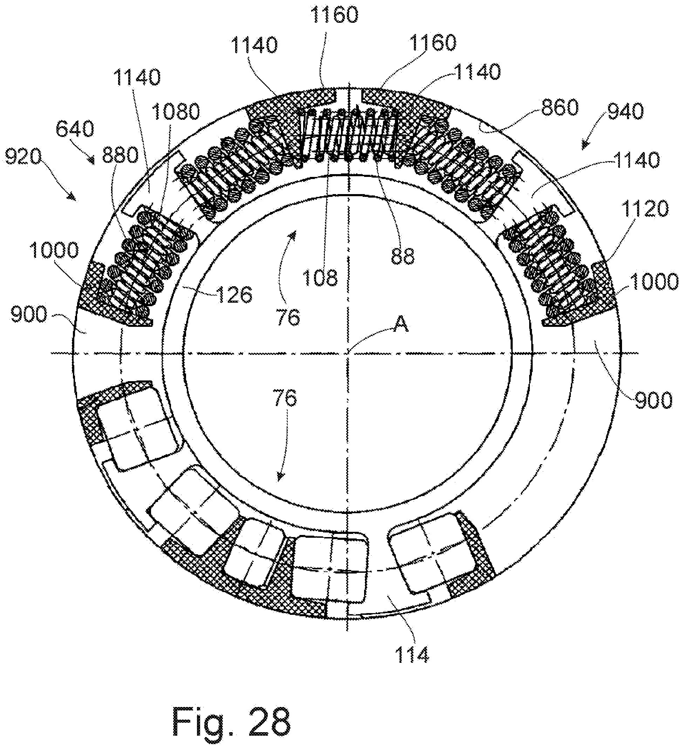

In Fig. 28 ist eine Ausgestaltungsvariante gezeigt, bei welcher der erste Torsionsschwingungsdämpferbereich 64 wieder zwei erste Dämpferfedereinheiten 76 aufweist, von welchen nur eine im Detail dargestellt ist. Die zwischen zwei Abstützarmen 900 jeweils angeordneten ersten Dämpferfedereinheiten 76 umfassen hier jeweils fünf in Umfangsrichtung aufeinander folgende Schraubendruckfedern 880 mit ggf. darin angeordneten Schraubendruckfedern 1080. Die in einer jeweiligen ersten Dämpferfedereinheit 76 in Umfangsrichtung mittig angeordnete Schraubendruckfeder 880 bzw. darin liegende Schraubendruckfeder 1080 ist zwischen zwei Abstützelementen 1140 angeordnet, die nach radial außen an der Abschlussfläche 860 abgestützt sind und sich entlang dieser gleitend oder/und rollend bewegen können. Zwischen den jeweils näher an den Umfangsendbereichen 920 bzw. 940 liegenden Schraubendruckfedern 880 bzw. 1080 ist jeweils ein Abstützelement 1140 vorgesehen, das zusammen mit einem weiteren Abstützelement 1140 einer oder mehrerer weiterer erster Dämpferfedereinheiten 76 an einem ringartigen Verbindungselement 1260 festgelegt ist und durch dieses nach radial außen gestützt und somit in Abstand zur Abschlussfläche 860 gehalten ist.

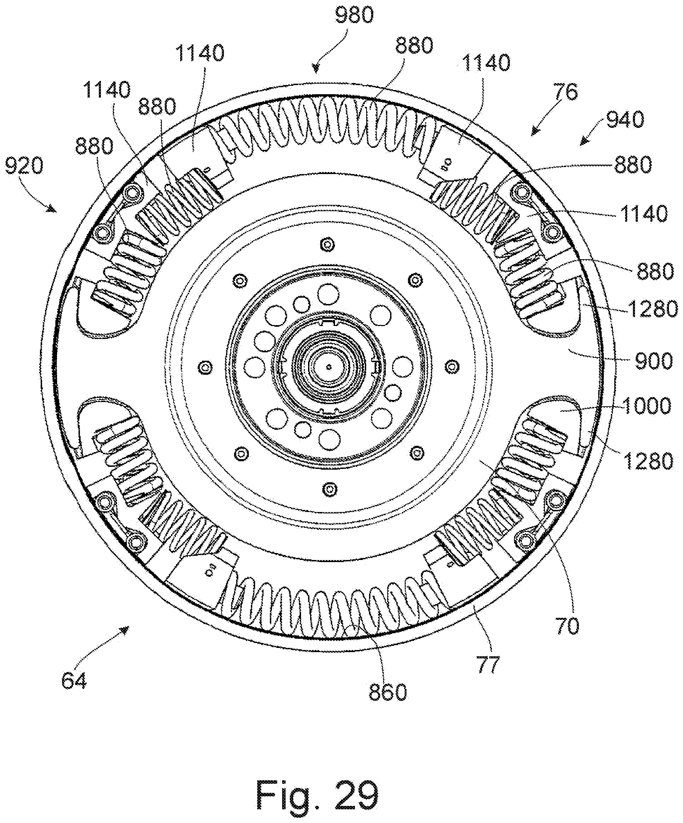

Die Fig. 29 zeigt eine Ausgestaltungsform, bei welcher jede erste Dämpferfedereinheit 76 ebenfalls wieder fünf in Umfangsrichtung aufeinander folgende Schraubendruckfedern 880 umfasst, wobei diese, wie dies die Fig. 29 deutlich zeigt, zueinander selbstverständlich auch unterschiedlich ausgestaltet sein können, so dass die serielle Schaltung all dieser Schraubendruckfedern 880 zusätzlich auch eine gestufte Wirksamkeit mit sich bringt. Die Abstützarme 900 des Zentralscheibenelements 70 sind beispielsweise so geformt, wie vorangehend bereits mit Bezug auf die Fig. 25 beschrieben. Die jeweils in Umfangsrichtung mittig, also im Umfangsmittenbereich 980 einer jeweiligen Dämpferfedereinheit 76 positionierte Schraubendruckfeder ist zwischen zwei Abstützelementen 1140 gehalten, die sich reibend an der Abschlussfläche 860 entlang bewegen können. Die an den jeweiligen Umfangsendbereichen 920 und 940 aufeinander folgenden Schraubendruckfedern 880 sind aneinander über Abstützelemente 1140 abgestützt, die bezüglich der Abschlussfläche 860 sich rollend bewegen können, wobei auch hier bei Erreichen einer bestimmten Grenzfliehkraft der Übergang in eine gleitende Bewegung erfolgen kann. Während hier die näher an den Umfangsendbereichen 920, 940 aufeinander folgenden Schraubendruckfedern 880 also so geführt und gehalten sind, dass sie überhaupt nicht in Reibwechselwirkung mit der Abschlussfläche 860 gelangen können, sind die in den Umfangsmittenbereichen 980 vorgesehenen Schraubendruckfedern 880 der ersten Dämpferfedereinheiten 76 so geführt bzw. gehalten, dass sie beispielsweise über ihre gesamte Umfangslänge in Anlage an der Abschlussfläche 860 sind. Zusätzlich können diese im Umfangsmittenbereich 980 angeordneten Schraubendruckfedern 880 vorgekrümmt sein.

Es sei abschließend darauf hingewiesen, dass selbstverständlich die verschiedenen vorangehend mit Bezug auf die Fig. 18 bis 29 beschriebenen Ausgestaltungsvarianten auch beliebig miteinander kombiniert werden können, wobei, wie dies vor allem die Fig. 29 deutlich zeigt, auch vorgesehen sein kann, dass innerhalb einer ersten Dämpferfedereinheit 64 verschiedene Maßnahmen zur Radialabstützung einer jeweiligen Schraubendruckfeder bzw. zum Verhindern von deren Reibwechselwirkung mit der Abschlussfläche getroffen sind. Selbstverständlich kann auch vorgesehen sein, dass lediglich in Zuordnung zu einem der Umfangsendbereiche einer oder mehrerer erster Dämpferfedereinheiten 76 Maßnahmen getroffen sind, die die Wechselwirkung mit der Abschlussfläche verhindern, während in einem anderen Umfangsendbereich derartige Maßnahmen nicht vorgesehen sind. Auf diese Art und Weise wird es möglich, einen ersten Torsionsschwingungsdämpferbereich vorzusehen, der abhängig von der Relativdrehrichtung zwischen dem ersten Eingangsbereich 68 und dem ersten Ausgangsbereich 72 unterschiedliche Dämpfungscharakteristiken aufweisen wird, da unterschiedliche Reibwechselwirkungen der jeweiligen ersten Dämpferfedereinheiten mit der Abschlussfläche erzeugt werden.

Es wird ferner darauf hingewiesen, dass die vorangehend beschriebenen Maßnahmen zur Minderung oder zum Beseitigen der Reibwechselwirkung zusätzlich oder alternativ auch bei dem radial weiter innen liegenden zweiten Torsionsschwingungsdämpferbereich vorgesehen sein können. Insbesondere wird darauf hingewiesen, dass die mit Bezug auf die Fig. 18 bis 29 erläuterten Maßnahmen, mit welchen die die Entkopplungsgüte beeinträchtigende Reibwechselwirkung von Dämpferfedereinheiten mit diese insbesondere radial außen umgebenden Bauteilen vermieden bzw. gemindert werden können, beliebig kombiniert werden können mit jeder der vorangehend mit Bezug auf die Fig. 3 bis 17 erläuterten Ausgestaltungsvarianten, bei welcher eine Mehrzahl an Torsionsschwingungsdämpferbereichen bzw. Torsionsschwingungsdämpfereinheiten vorhanden ist. Diese bedeutet, dass insbesondere dann, wenn einer der Torsionsschwingungsdämpferbereiche, vor allem der erste, radial äußerste Torsionsschwingungsdämpferbereich 64, mit zwei oder mehreren Torsionsschwingungsdämpfereinheiten ausgebildet ist, auch in jeder dieser Torsionsschwingungsdämpfereinheiten oder in nur einer oder einzelnen davon die bzw. verschiedene der vorangehend erläuterten Maßnahmen vorgesehen sein können.

**Patentansprüche**

1. Hydrodynamische Kopplungseinrichtung, insbesondere Drehmomentwandler, umfassend ein Gehäuse (12) mit einem Pumpenrad (23), ein in einem Innenraum (26) des Gehäuses (12) angeordnetes Turbinenrad (28) und eine Überbrückungskupplungsanordnung (42) mit einer ersten Reibflächenformation (44), die mit dem Gehäuse (12) zur gemeinsamen Drehung um eine Drehachse (A) verbunden ist, einer zweiten Reibflächenformation (46), die mit dem Turbinenrad (28) zur gemeinsamen Drehung verbunden ist, und einem Kolbenelement (56), wobei die zweite Reibflächenformation (46) über eine Torsionsdämpferanordnung (34) mit einer Turbinenradnabe (36) des Turbinenrads (28) gekoppelt ist, wobei die Torsionsdämpferanordnung (34) einen ersten Torsionsschwingungsdämpferbereich (64) mit einem mit der zweiten Reibflächenformation (46) verbundenen ersten Eingangsbereich (68) und einem über eine Mehrzahl erster Dämpferfedereinheiten (76) mit dem ersten Eingangsbereich (68) gekoppelten ersten Ausgangsbereich (72) sowie einen zweiten Torsionsschwingungsdämpferbereich (66) mit einem mit dem ersten Ausgangsbereich (72) verbundenen zweiten Eingangsbereich (78) und einem über eine Mehrzahl zweiter Dämpferfedereinheiten (84) mit dem zweiten Eingangsbereich (78) gekoppelten zweiten Ausgangsbereich (82) umfasst, wobei eine Baugruppe von erstem Eingangsbereich (68) und erstem Ausgangsbereich (72) eine die ersten Dämpferfedereinheiten (76) radial außen wenigstens bereichsweise umgebende Abschlussfläche (860) bereitstellt, bezüglich der wenigstens eine der ersten Dämpferfedereinheiten (76) wenigstens teilweise reibungsentkoppelt oder reibungsmindernd geführt ist,

wobei der erste Ausgangsbereich (72) mit dem zweiten Eingangsbereich (78) über einen dritten Torsionsschwingungsdämpferbereich (94) verbunden ist, der einen mit dem ersten Ausgangsbereich (72) verbundenen dritten Eingangsbereich (92) und einen über eine Mehrzahl dritter Dämpferfedereinheiten (98) mit dem dritten Eingangsbereich (92) gekoppelten dritten Ausgangsbereich (96) aufweist **dadurch gekennzeichnet, dass** eine Turbinenradschale (30) des Turbinenrads (28) mit dem dritten Eingangsbereich (92) so verbunden ist, dass im Drehmomentübertragungsweg zwischen der Turbinenradschale (30) und der Turbinenradnabe (36) von dem ersten bis dritten Torsionsschwingungsdämpferbereich (64, 66, 94) nur der zweite und dritte Torsionsschwingungsdämpferbereich (66, 94) wirksam ist,

**oder dadurch, dass** eine Turbinenradschale (30) des Turbinenrads (28) mit dem dritten Ausgangsbereich (96) so verbunden ist, dass im Drehmomentübertragungsweg zwischen der Turbinenradschale (30) und der Turbinenradnabe (36) von dem ersten bis dritten Torsionsschwingungsdämpferbereich (64, 66, 94) nur der zweite Torsionsschwingungsdämpferbereich (66) wirksam ist.

2.   Hydrodynamische Kopplungseinrichtung nach Anspruch 1,
**dadurch gekennzeichnet, dass** der dritte Ausgangsbereich (96) mit dem zweiten Eingangsbereich (78) verbunden ist.

3.   Hydrodynamische Kopplungseinrichtung nach Anspruch 2,
**dadurch gekennzeichnet, dass** der dritte Ausgangsbereich (96) mit dem zweiten Eingangsbereich (78) über einen vierten Torsionsschwingungsdämpferbereich (102) verbunden ist.

4.   Hydrodynamische Kopplungseinrichtung nach Anspruch 3,
**dadurch gekennzeichnet, dass** der vierte Torsionsschwingungsdämpferbereich (102) einen mit dem dritten Ausgangsbereich (96) verbundenen vierten Eingangsbereich (104) und einen über eine Mehrzahl vierter Dämpferfedereinheiten (108) mit dem vierten Eingangsbereich (104) gekoppelten vierten Ausgangsbereich (106) umfasst.

5.   Hydrodynamische Kopplungseinrichtung nach einem der Ansprüche 1 bis 4
**dadurch gekennzeichnet, dass** wenigstens einer der Torsionsschwingungsdämpferbereiche (94; 102) in einem von dem Turbinenrad (28) und dem Pumpenrad (23) umgebenen Ringraum (100) angeordnet ist.

6.   Hydrodynamische Kopplungseinrichtung nach Anspruch 5,
**dadurch gekennzeichnet, dass** der dritte Torsionsschwingungsdämpferbereich (94) in dem Ringraum (100) angeordnet ist.

7.   Hydrodynamische Kopplungseinrichtung nach Anspruch 3 und Anspruch 5,
**dadurch gekennzeichnet, dass** der vierte Torsionsschwingungsdämpferbereich (108) in dem Ringraum (100) angeordnet ist.

8.   Hydrodynamische Kopplungseinrichtung nach einem der Ansprüche 1 bis 7,
**dadurch gekennzeichnet, dass** wenigstens einer der Torsionsschwingungsdämpferbereiche (64, 66, 94) wenigstens zwei Torsionsschwingungsdämpfereinheiten (64', 64", 66', 66", 94', 94") aufweist, und dass wenigstens eine der ersten Dämpferfedereinheiten (76) wenigstens teilweise bezüglich der Abschlussfläche (860) reibungsentkoppelt oder reibungsmindernd geführt ist.

9.   Hydrodynamische Kopplungseinrichtung nach Anspruch 8,
**dadurch gekennzeichnet, dass** die wenigstens zwei Torsionsschwingungsdämpfereinheiten (64', 64", 66', 66", 94', 94") eines Torsionsschwingungsdämpferbereichs (64, 66, 94) axial aufeinander folgend angeordnet sind.

10. Hydrodynamische Kopplungseinrichtung nach Anspruch 8 oder 9, **dadurch gekennzeichnet, dass** jede Torsionsschwingungsdämpfereinheit (64', 64", 66', 66", 94', 94") eines der Torsionsschwingungsdämpferbereiche (64, 66, 94) eine Mehrzahl von Dämpferfedereinheiten (76', 76", 84', 84", 98', 98") dieses Torsionsschwingungsdämpferbereichs (64, 66, 94) aufweist.

11. Hydrodynamische Kopplungseinrichtung nach einem der Ansprüche 8 bis 10, **dadurch gekennzeichnet, dass** jede Torsionsschwingungsdämpfereinheit (64', 64", 66', 66", 94', 94") einen Eingangsbereich (68', 68", 78', 78", 92', 92") und einen Ausgangsbereich (72', 72", 82', 82", 96', 96") aufweist und dass die Eingangsbereiche der Torsionsschwingungsdämpfereinheiten (64', 64", 66', 66", 94', 94") eines der Torsionsschwingungsdämpferbereiche (64, 66, 94) im Wesentlichen den Eingangsbereich (68, 78, 92) dieses Torsionsschwingungsdämpferbereichs (64, 66, 94) bilden und die Ausgangsbereiche (72', 72", 82', 82", 96', 96") der Torsionsschwingungsdämpfereinheiten (64', 64", 66', 66", 94', 94") eines der Torsionsschwingungsdämpferbereiche (64, 66, 94) im Wesentlichen den Ausgangsbereich (72, 82, 96) dieses Torsionsschwingungsdämpferbereichs (64, 66, 94) bilden.

12. Hydrodynamische Kopplungseinrichtung nach einem der Ansprüche 8 bis 11, **dadurch gekennzeichnet, dass** wenigstens eine der Torsionsschwingungsdämpfereinheiten (84") in einem von dem Turbinenrad (28) und dem Pumpenrad (23) umgebenen Ringraum (100) angeordnet ist.

13. Hydrodynamische Kopplungseinrichtung nach einem der Ansprüche 1 bis 12, **dadurch gekennzeichnet, dass** bei wenigstens einem der Torsionsschwingungsdämpferbereiche (66) wenigstens eine der Dämpferfedereinheiten (84) eine Mehrzahl von in Umfangsrichtung aufeinander folgenden und bezüglich einander abgestützten Dämpferfedern (86) umfasst, und dass wenigstens eine der ersten Dämpferfedereinheit (76) wenigstens teilweise bezüglich der Abschlussfläche (860) reibungsentkoppelt oder reibungsmindernd geführt ist.

14. Hydrodynamische Kopplungseinrichtung nach Anspruch 13, **dadurch gekennzeichnet, dass** die Dämpferfedern (86) über wenigstens ein Zwischenabstützelement (88, 90) bezüglich einander abgestützt sind.

15. Hydrodynamische Kopplungseinrichtung nach Anspruch 14, **dadurch gekennzeichnet, dass** das wenigstens eine Zwischenabstützelement (88, 90) ringartig ausgebildet ist.

16. Hydrodynamische Kopplungseinrichtung nach einem der Ansprüche 13 bis 15, **dadurch gekennzeichnet, dass** der wenigstens eine Torsionsschwingungsdämpferbereich (66) der zweite Torsionsschwingungsdämpferbereich (66) ist.

17. Hydrodynamische Kopplungseinrichtung nach einem der Ansprüche 1 bis 16, **dadurch gekennzeichnet, dass** im Drehmomentenfluss vor dem Gehäuse (12) ein Torsionsschwingungsdämpfer (116) vorgesehen ist, dessen Eingangsbereich (118) mit einem Antriebsorgan zur gemeinsamen Drehung um die Drehachse (A) zu koppeln ist und dessen Ausgangsbereich (120) mit dem Gehäuse (12) zur gemeinsamen Drehung um die Drehachse A zu koppeln ist.

18. Hydrodynamische Kopplungseinrichtung nach einem der Ansprüche 1 bis 17, **dadurch gekennzeichnet, dass** die andere Baugruppe von erstem Eingangsbereich (68) und erstem Ausgangsbereich (72) für wenigstens einen Umfangsendbereich (920, 940) wenigstens einer der ersten Dämpferfedereinheiten (76) einen Umfangsabstützbereich (900) aufweist in dessen Bereich diese erste Dämpferfedereinheit (76) mit ihrem Umfangsendbereich (920, 940) in Abstand zur Abschlussfläche (860) verläuft.

19. Hydrodynamische Kopplungseinrichtung nach Anspruch 18, **dadurch gekennzeichnet, dass** die wenigstens eine der ersten Dämpferfedereinheiten (76) durch den Umfangsabstützbereich (900) oder ein sich daran abstützendes Abstützelement (1000) in radialem Abstand zur Abschlussfläche (860) gehalten ist.

20. Hydrodynamische Kopplungseinrichtung nach Anspruch 18 oder 19, **dadurch gekennzeichnet, dass** die wenigstens eine der ersten Dämpferfedereinheiten (76) in ihrem Umfangsendbereich (920, 940) derart geformt ist, dass sie bei fehlender Fliehkraftbelastung in Abstand zur Abschlussfläche (860) verläuft.

21. Hydrodynamische Kopplungseinrichtung nach einem der Ansprüche 18 bis 20, **dadurch gekennzeichnet, dass** die wenigstens eine der ersten Dämpferfedereinheiten (76) in ihrem Umfangsendbereich (920, 940) eine geringere Außenabmessung aufweist, als in einem von dem Umfangsendbereich (920, 940) weiter entfernt liegenden Bereich (1100).

22. Hydrodynamische Kopplungseinrichtung nach Anspruch 21,
**dadurch gekennzeichnet, dass** eine Längsmittenachse der wenigstens einen der ersten Dämpferfedereinheiten (76) in dem Umfangsendbereich (920, 940) bezüglich einer Längsmittenachse in dem vom Umfangsendbereich (920, 940) weiter entfernt liegenden Bereich (1100) nach radial innen versetzt liegt.

23. Hydrodynamische Kopplungseinrichtung nach einem der Ansprüche 18 bis 22, **dadurch gekennzeichnet, dass** die wenigstens eine der ersten Dämpferfedereinheiten (76) in dem Umfangsendbereich (920, 940) radial außen durch einen bezüglich des Umfangsendbereichs (920, 940) radial festen Führungsabschnitt (1120) übergriffen ist.

24. Hydrodynamische Kopplungseinrichtung nach einem der Ansprüche 18 bis 23, **dadurch gekennzeichnet, dass** die Abschlussfläche (860) in einem dem Umfangsendbereich (920, 940) der wenigstens einen der ersten Dämpferfedereinheiten (76) entsprechenden Umfangsbereich eine von einer Kreisbahn um die Drehachse (A) abweichende Ausformung (1200) nach radial außen aufweist.

25. Hydrodynamische Kopplungseinrichtung nach einem der Ansprüche 1 bis 24, **dadurch gekennzeichnet, dass** in wenigstens einer der ersten Dämpferfedereinheiten (76) wenigstens ein diese gegen Verformung nach radial außen stützendes Radialabstützelement (1220; 1080) angeordnet ist.

26. Hydrodynamische Kopplungseinrichtung nach Anspruch 25,
**dadurch gekennzeichnet, dass** das wenigstens eine Radialabstützelement (1220) stangenartig ausgebildet ist.

27. Hydrodynamische Kopplungseinrichtung nach Anspruch 25,
**dadurch gekennzeichnet, dass** das wenigstens eine Radialabstützelement (1080) als Schraubenfeder ausgebildet ist.

28. Hydrodynamische Kopplungseinrichtung nach einem der Ansprüche 1 bis 27, **dadurch gekennzeichnet, dass** wenigstens eine der ersten Dämpferfedereinheit (76) in einem im Wesentlichen unbelasteten Zustand ausgehend von einem Umfangsendbereich (920, 940) nach radial innen gekrümmt ist.

29. Hydrodynamische Kopplungseinrichtung nach einem der Ansprüche 1 bis 28, **dadurch gekennzeichnet, dass** wenigstens eine der ersten Dämpferfedereinheiten (76) an wenigstens einem Zwischenbereich zwischen deren Umfangsendbereichen (920, 940) über ein Abstützelement (1140) bezüglich der Abschlussfläche (860) radial abgestützt ist.

30. Hydrodynamische Kopplungseinrichtung nach einem der Ansprüche 1 bis 29, **dadurch gekennzeichnet, dass wenigstens** eine der ersten Dämpferfedereinheiten (76) eine Mehrzahl von in Umfangsrichtung aufeinander folgenden Dämpferfedern (880, 1080) umfasst.

31. Hydrodynamische Kopplungseinrichtung nach Anspruch 29 und 30,
**dadurch gekennzeichnet, dass** wenigstens zwei Dämpferfedern (880, 1080) über ein Abstützelement (1140) in Umfangsrichtung bezüglich einander abgestützt sind.

32. Hydrodynamische Kopplungseinrichtung nach einem der Ansprüche 29 bis 31, **dadurch gekennzeichnet, dass** wenigstens ein Abstützelement (1140) durch Gleitbewegung bezüglich der Abschlussfläche (860) in Umfangsrichtung bewegbar ist.

33. Hydrodynamische Kopplungseinrichtung nach einem der Ansprüche 29 bis 32, **dadurch gekennzeichnet, dass** wenigstens ein Abstützelement (1140) durch Rollbewegung in Umfangsrichtung bezüglich der Abschlussfläche (860) bewegbar ist.

34. Hydrodynamische Kopplungseinrichtung nach Anspruch 30 oder einem der Ansprüche 31 bis 33, sofern auf 30 rückbezogen,
**dadurch gekennzeichnet, dass** wenigstens zwei Dämpferfedern (880, 1080) durch eine ringartige Radialabstützanordnung (1140, 1260) ohne Kontakt zur Abschlussfläche (860) nach radial außen und in Umfangsrichtung bezüglich einander abgestützt sind.

35. Hydrodynamische Kopplungseinrichtung nach einem der Ansprüche 1 bis 34, **dadurch gekennzeichnet, dass** wenigstens eine der ersten Dämpferfedereinheiten (76) in einem Umfangsmittenbereich (980) nach radial außen an der Abschlussfläche (860) anliegt.

36. Antriebssystem für ein Fahrzeug, umfassend eine Brennkraftmaschine (142) eine die Brennkraftmaschine (142) mit einem Getriebe (148) koppelnde hydrodynamische Kopplungseinrichtung (10) nach einem oder mehreren der vorangehenden Ansprüche, eine das Getriebe (148) mit wenigstens zwei Antriebsrädern (158, 160) über jeweilige Antriebsradwellenanordnungen (154, 156) koppelnde Differentialanordnung (152), wobei für die Gesamtsteifigkeit G der Antriebsradwellenanordnungen (154, 156) gilt:

$$G = A \times z \ [Nm/°],$$

wobei

> A = eine Zahl im Bereich von 30 bis 70, vorzugsweise 40 bis 50, ist,
> z = die Anzahl der Zylinder der Brennkraftmaschine (142) ist.

## Claims

1. Hydrodynamic coupling device, in particular torque converter, comprising a housing (12) which has a pump wheel (23), comprising a turbine wheel (28) which is arranged in an interior (26) of the housing (12), and comprising a lock-up clutch arrangement (42) which has a first friction surface formation (44) connected to the housing (12) for joint rotation about an axis of rotation (A), has a second friction surface formation (46) connected to the turbine wheel (28) for joint rotation, and has a piston element (56), wherein the second friction surface formation (46) is coupled to a turbine wheel hub (36) of the turbine wheel (28) via a torsional damper arrangement (34), wherein the torsional damper arrangement (34) comprises a first torsional vibration damper region (64), which has a first input region (68) connected to the second friction surface formation (46) and has a first output region (72) coupled to the first input region (68) via a plurality of first damper spring units (76), and comprises a second torsional vibration damper region (66), which has a second input region (78) connected to the first output region (72) and has a second output region (82) coupled to the second input region (78) via a plurality of second damper spring units (84), wherein an assembly of first input region (68) and first output region (72) provides a terminating face (860) which, at least regionally, surrounds the first damper spring units (76) radially at the outside and with respect to which at least one of the first damper spring units (76) is at least partially guided in a frictionally decoupled or friction-reducing manner, wherein the first output region (72) is connected to the second input region (78) via a third torsional vibration damper region (94), which has a third input region (92) connected to the first output region (72) and has a third output region (96) coupled to the third input region (92) via a plurality of third damper spring units (98), **characterized in that** a turbine wheel shell (30) of the turbine wheel (28) is connected to the third input region (92) such that only the second and third torsional vibration damper regions (66, 94) are active in the torque transmission path between the turbine wheel shell (30) and the turbine wheel hub (36) from the first to the third torsional vibration damper region (64, 66, 94),
**or in that** a turbine wheel shell (30) of the turbine wheel (28) is connected to the third output region (96) such that only the second torsional vibration damper region (66) is active in the torque transmission path between the turbine wheel shell (30) and the turbine wheel hub (36) from the first to the third torsional vibration damper region (64, 66, 94) .

2. Hydrodynamic coupling device according to Claim 1, **characterized in that** the third output region (96) is connected to the second input region (78).

3. Hydrodynamic coupling device according to Claim 2, **characterized in that** the third output region (96) is connected to the second input region (78) via a fourth torsional vibration damper region (102).

4. Hydrodynamic coupling device according to Claim 3, **characterized in that** the fourth torsional vibration damper region (102) comprises a fourth input region (104) connected to the third output region (96) and comprises a fourth output region (106) coupled to the fourth input region (104) via a plurality of fourth damper spring units (108).

5. Hydrodynamic coupling device according to one of Claims 1 to 4, **characterized in that** at least one of the torsional vibration damper regions (94; 102) is arranged in an annular space (100) surrounded by the turbine wheel (28) and by the pump wheel (23).

6. Hydrodynamic coupling device according to Claim 5, **characterized in that** the third torsional vibration damper region (94) is arranged in the annular space (100) .

7. Hydrodynamic coupling device according to Claim 3 and Claim 5, **characterized in that** the fourth torsional vibration damper region (108) is arranged in the annular space (100).

8. Hydrodynamic coupling device according to one of Claims 1 to 7, **characterized in that** at least one of the torsional vibration damper regions (64, 66, 94) has at least two torsional vibration damper units (64', 64", 66', 66", 94', 94"), and **in that** at least one of the first damper spring units (76) is at least partially guided in a frictionally decoupled or friction-reducing manner with respect to the terminating face (860).

9. Hydrodynamic coupling device according to Claim 8, **characterized in that** the at least two torsional vibration damper units (64', 64", 66', 66", 94', 94") of a torsional vibration damper region (64, 66, 94) are arranged axially in succession.

10. Hydrodynamic coupling device according to Claim 8 or 9, **characterized in that** each torsional vibration damper unit (64', 64", 66', 66", 94', 94") of one of the torsional vibration damper regions (64, 66, 94) has a plurality of damper spring units (76', 76", 84', 84", 98', 98") of this torsional vibration damper region (64, 66, 94).

11. Hydrodynamic coupling device according to one of Claims 8 to 10, **characterized in that** each torsional vibration damper unit (64', 64", 66', 66", 94', 94") has an input region (68', 68", 78', 78", 92', 92") and an output region (72', 72", 82', 82", 96', 96"), and **in that** the input regions of the torsional vibration damper units (64', 64", 66', 66", 94', 94") of one of the torsional vibration damper regions (64, 66, 94) substantially form the input region (68, 78, 92) of this torsional vibration damper region (64, 66, 94), and the output regions (72', 72", 82', 82", 96', 96") of the torsional vibration damper units (64', 64", 66', 66", 94', 94") of one of the torsional vibration damper regions (64, 66, 94) substantially form the output region (72, 82, 96) of this torsional vibration damper region (64, 66, 94).

12. Hydrodynamic coupling device according to one of Claims 8 to 11, **characterized in that** at least one of the torsional vibration damper units (84") is arranged in an annular space (100) surrounded by the turbine wheel (28) and by the pump wheel (23).

13. Hydrodynamic coupling device according to one of Claims 1 to 12, **characterized in that,** with at least one of the torsional vibration damper regions (66), at least one of the damper spring units (84) comprises a plurality of damper springs (86) which are circumferentially successive and which are supported with respect to one another, and **in that** at least one of the first damper spring units (76) is at least partially guided in a frictionally decoupled or friction-reducing manner with respect to the terminating face (860).

14. Hydrodynamic coupling device according to Claim 13,
   **characterized in that** the damper springs (86) are supported with respect to one another via at least one intermediate supporting element (88, 90).

15. Hydrodynamic coupling device according to Claim 14,
   **characterized in that** the at least one intermediate supporting element (88, 90) is of ring-like form.

16. Hydrodynamic coupling device according to one of Claims 13 to 15, **characterized in that** the at least one torsional vibration damper region (66) is the second torsional vibration damper region (66).

17. Hydrodynamic coupling device according to one of Claims 1 to 16, **characterized in that,** upstream of the housing (12) in the torque flow, provision is made of a torsional vibration damper (116) whose input region (118) can be coupled to a drive member for joint rotation about the axis of rotation (A) and whose output region (120) can be coupled to the housing (12) for joint rotation about the axis of rotation (A).

18. Hydrodynamic coupling device according to one of Claims 1 to 17, **characterized in that** the other assembly of first input region (68) and first output region (72) has, for at least one circumferential end region (920, 940) of at least one of the first damper spring units (76), a circumferential supporting region (900), in the region of which this first damper spring unit (76) extends with its circumferential end region (920, 940) at a distance from the terminating face (860).

19. Hydrodynamic coupling device according to Claim 18,
   **characterized in that** the at least one of the first damper spring units (76) is held at a radial distance from the terminating face (860) by the circumferential supporting region (900) or a supporting element (1000) which is supported thereon.

20. Hydrodynamic coupling device according to Claim 18 or 19, **characterized in that** the at least one of the first damper spring units (76) is shaped in its circumferential end region (920, 940) such that, with absence of centrifugal force loading, it extends at a distance from the terminating face (860) .

21. Hydrodynamic coupling device according to one of Claims 18 to 20, **characterized in that** the at least one of the first damper spring units (76) has a smaller outer measurement in its circumferential end region (920, 940) than in a region (1100) situated further away from the circumferential end region (920, 940) .

22. Hydrodynamic coupling device according to Claim 21,
   **characterized in that** a longitudinal central axis of the at least one of the first damper spring units (76) in the circumferential end region (920, 940) is situated radially inwardly offset with respect to a longitudinal central axis in the region (1100) situated further away from the circumferential end region (920, 940).

23. Hydrodynamic coupling device according to one of Claims 18 to 22, **characterized in that** the at least one of the first damper spring units (76) is, in the circumferential end region (920, 940), engaged over radially at the outside by a guide section (1120) which, with respect to the circumferential end region (920, 940), is radially fixed.

24. Hydrodynamic coupling device according to one of Claims 18 to 23, **characterized in that** the terminating face (860) has, radially to the outside, in a circumferential region corresponding to the circumferential end region (920, 940) of the at least one of the first damper spring units (76), a formation (1200) which deviates from a circular path about the axis of rotation (A).

25. Hydrodynamic coupling device according to one of Claims 1 to 24, **characterized in that,** in at least one of the first damper spring units (76), there is arranged at least one radial supporting element (1220; 1080) which supports this damper spring unit against radially outward deformation.

26. Hydrodynamic coupling device according to Claim 25,
**characterized in that** the at least one radial supporting element (1220) is of bar-like form.

27. Hydrodynamic coupling device according to Claim 25,
**characterized in that** the at least one radial supporting element (1080) is in the form of a helical spring.

28. Hydrodynamic coupling device according to one of Claims 1 to 27, **characterized in that** at least one of the first damper spring units (76), in a substantially unloaded state, is, proceeding from a circumferential end region (920, 940), curved radially inwardly.

29. Hydrodynamic coupling device according to one of Claims 1 to 28, **characterized in that** at least one of the first damper spring units (76) is, at at least one intermediate region between the circumferential end regions (920, 940) thereof, supported radially with respect to the terminating face (860) via a supporting element (1140).

30. Hydrodynamic coupling device according to one of Claims 1 to 29, **characterized in that** at least one of the first damper spring units (76) comprises a plurality of circumferentially successive damper springs (880, 1080).

31. Hydrodynamic coupling device according to Claim 29 and 30, **characterized in that** at least two damper springs (880, 1080) are supported with respect to one another in a circumferential direction via a supporting element (1140).

32. Hydrodynamic coupling device according to one of Claims 29 to 31, **characterized in that** at least one supporting element (1140) is movable with respect to the terminating face (860) in the circumferential direction by way of sliding movement.

33. Hydrodynamic coupling device according to one of Claims 29 to 32, **characterized in that** at least one supporting element (1140) is movable with respect to the terminating face (860) in the circumferential direction by way of rolling movement.

34. Hydrodynamic coupling device according to Claim 30 or one of Claims 31 to 33 where referred back to Claim 30, **characterized in that** at least two damper springs (880, 1080) are supported radially outwardly and with respect to one another in a circumferential direction without contact with the terminating face (860) by a ring-like radial support arrangement (1140, 1260).

35. Hydrodynamic coupling device according to one of Claims 1 to 34, **characterized in that,** in a circumferential central region (980), at least one of the first damper spring units (76) bears radially outwardly against the terminating face (860).

36. Drive system for a vehicle, comprising an internal combustion engine (142), comprising a hydrodynamic coupling device (10) according to one or more of the preceding claims coupling the internal combustion engine (142) to a transmission (148), and comprising a differential arrangement (152) coupling the transmission (148) to at least two driven wheels (158, 160) via respective driven-wheel shaft arrangements (154, 156), wherein, for the overall stiffness G of the driven-wheel shaft arrangements (154, 156), it holds that:

$$G = A \times z \ [Nm/°],$$

where

A = a number in the range from 30 to 70, preferably 40 to 50,
Z = the number of cylinders of the internal combustion engine (142).

**Revendications**

1. Dispositif d'accouplement hydrodynamique, notamment convertisseur de couple, comprenant un carter (12) muni d'une roue de pompe (23), une roue de turbine (28) disposée dans l'espace intérieur (26) du carter (12) et un arrangement d'accouplement de pontage (42) ayant une première formation de surfaces de friction (44), qui est reliée au carter (12) en vue de la rotation conjointe autour d'un axe de rotation (A), une deuxième formation de surfaces de friction (46), qui est reliée à la roue de turbine (28) en vue de la rotation conjointe, et un élément piston (56), la deuxième formation de surfaces de friction (46) étant accouplée à un moyeu de roue de turbine (36) de la roue de turbine (28) par le biais d'un arrangement amortisseur de torsion (34), l'arrangement amortisseur de torsion (34) comportant une première zone d'amortisseur de vibrations torsionnelles (64) munie d'une première zone d'entrée (68) reliée à la deuxième formation de surfaces de friction (46) et d'une première zone de sortie (72) accouplée à la première zone d'entrée (68) par le biais d'une pluralité de premières unités de ressort amortisseur (76) ainsi qu'une deuxième zone d'amortisseur de vibrations torsionnelles (66) munie d'une deuxième zone d'entrée (78) reliée à la première zone de sortie (72) et d'une deuxième zone de sortie (82) accouplée à la deuxième zone d'entrée (78) par le biais d'une pluralité de deuxièmes unités de ressort amortisseur (84), un sous-ensemble composé de la première zone d'entrée (68) et de la première zone de sortie (72) fournissant une surface de terminaison (860) qui entoure au moins dans certaines zones les premières unités de ressort amortisseur (76) dans le sens radial à l'extérieur, en référence à laquelle au moins l'une des premières unités de ressort amortisseur (76) est guidée en étant au moins partiellement désaccouplée en friction ou à friction réduite, la première zone de sortie (72) étant reliée à la deuxième zone d'entrée (78) par le biais d'une troisième zone d'amortisseur de vibrations torsionnelles (94), laquelle possède une troisième zone d'entrée (92) reliée à la première zone de sortie (72) et une troisième zone de sortie (96) accouplée à la troisième zone d'entrée (92) par le biais d'une pluralité de troisièmes unités de ressort amortisseur (98) **caractérisé en ce qu'**une coque de roue de turbine (30) de la roue de turbine (28) est reliée à la troisième zone d'entrée (92) de telle sorte que dans le trajet de transmission de couple entre la coque de roue de turbine (30) et le moyeu de roue de turbine (36), parmi les première à troisième zones d'amortisseur de vibrations torsionnelles (64, 66, 94) seules les deuxième et troisième zones d'amortisseur de vibrations torsionnelles (66, 94) sont actives,

ou **en ce qu'**une coque de roue de turbine (30) de la roue de turbine (28) est reliée à la troisième zone de sortie (96) de telle sorte que dans le trajet de transmission de couple entre la coque de roue de turbine (30) et le moyeu de roue de turbine (36), parmi les première à troisième zones d'amortisseur de vibrations torsionnelles (64, 66, 94) seule la deuxième zone d'amortisseur de vibrations torsionnelles (66) est active.

2. Dispositif d'accouplement hydrodynamique selon la revendication 1, **caractérisé en ce que** la troisième zone de sortie (96) est reliée à la deuxième zone d'entrée (78).

3. Dispositif d'accouplement hydrodynamique selon la revendication 2, **caractérisé en ce que** la troisième zone de sortie (96) est reliée à la deuxième zone d'entrée (78) par le biais d'une quatrième zone d'amortisseur de vibrations torsionnelles (102).

4. Dispositif d'accouplement hydrodynamique selon la revendication 3, **caractérisé en ce que** la quatrième zone d'amortisseur de vibrations torsionnelles (102) comporte une quatrième zone d'entrée (104) reliée à la troisième zone de sortie (96) et une quatrième zone de sortie (106) accouplée à la quatrième zone d'entrée (104) par le biais d'une pluralité de quatrièmes unités de ressort amortisseur (108).

5. Dispositif d'accouplement hydrodynamique selon l'une des revendications 1 à 4, **caractérisé en ce qu'**au moins l'une des zones d'amortisseur de vibrations torsionnelles (94 ; 102) est disposée dans un espace annulaire (100) entouré par la roue de turbine (28) et par la roue de pompe (23).

6. Dispositif d'accouplement hydrodynamique selon la revendication 5, **caractérisé en ce que** la troisième zone d'amortisseur de vibrations torsionnelles (94) est disposée dans l'espace annulaire (100).

7. Dispositif d'accouplement hydrodynamique selon la revendication 3 et la revendication 5, **caractérisé en ce que** la quatrième zone d'amortisseur de vibrations torsionnelles (108) est disposée dans l'espace annulaire (100).

8. Dispositif d'accouplement hydrodynamique selon l'une des revendications 1 à 7, **caractérisé en ce qu'**au moins l'une des zones d'amortisseur de vibrations torsionnelles (64, 66, 94) possède au moins deux unités d'amortisseur de vibrations torsionnelles (64', 64", 66', 66", 94', 94"), et **en ce qu'**au moins l'une des premières unités de ressort amortisseur (76) est guidée en étant au moins partiellement désaccouplée en friction ou à friction réduite par rapport à la surface de terminaison (860).

9. Dispositif d'accouplement hydrodynamique selon la revendication 8, **caractérisé en ce que** les au moins deux unités d'amortisseur de vibrations torsionnelles (64', 64", 66', 66", 94', 94") d'une zone d'amortisseur de vibrations torsionnelles (64, 66, 94) sont disposées l'une à la suite de l'autre dans le sens axial.

10. Dispositif d'accouplement hydrodynamique selon la revendication 8 ou 9, **caractérisé en ce que** chaque unité d'amortisseur de vibrations torsionnelles (64', 64", 66', 66", 94', 94") de l'une des zones d'amortisseur de vibrations torsionnelles (64, 66, 94) possède une pluralité d'unités de ressort amortisseur (76', 76", 84', 84", 98', 98") de cette zone d'amortisseur de vibrations torsionnelles (64, 66, 94).

**11.** Dispositif d'accouplement hydrodynamique selon l'une des revendications 8 à 10, **caractérisé en ce que** chaque unité d'amortisseur de vibrations torsionnelles (64', 64", 66', 66", 94', 94") possède une zone d'entrée (68', 68", 78', 78", 92', 92") et une zone de sortie (72', 72", 82', 82", 96', 96") et **en ce que** les zones d'entrée des unités d'amortisseur de vibrations torsionnelles (64', 64", 66', 66", 94', 94") de l'une des zones d'amortisseur de vibrations torsionnelles (64, 66, 94) forment sensiblement la zone d'entrée (68, 78, 94) de cette zone d'amortisseur de vibrations torsionnelles (64, 66, 94) et les zones de sortie (72', 72", 82', 82", 96', 96") des unités d'amortisseur de vibrations torsionnelles (64', 64", 66', 66", 94', 94") de l'une des zones d'amortisseur de vibrations torsionnelles (64, 66, 94) forment sensiblement la zone de sortie (72, 82, 96) de cette zone d'amortisseur de vibrations torsionnelles (64, 66, 94).

**12.** Dispositif d'accouplement hydrodynamique selon l'une des revendications 8 à 11, **caractérisé en ce qu'**au moins l'une des unités d'amortisseur de vibrations torsionnelles (84") est disposée dans un espace annulaire (100) entouré par la roue de turbine (28) et par la roue de pompe (23).

**13.** Dispositif d'accouplement hydrodynamique selon l'une des revendications 1 à 12, **caractérisé en ce qu'**avec au moins l'une des zones d'amortisseur de vibrations torsionnelles (66), au moins l'une des unités de ressort amortisseur (84) comporte une pluralité de ressorts amortisseurs (86) qui se suivent mutuellement dans la direction périphérique et en appui les uns par rapport aux autres, et **en ce qu'**au moins l'une des premières unités de ressort amortisseur (76) est guidée en étant au moins partiellement désaccouplée en friction ou à friction réduite par rapport à la surface de terminaison (860).

**14.** Dispositif d'accouplement hydrodynamique selon la revendication 13, **caractérisé en ce que** les ressorts amortisseurs (86) sont en appui les uns par rapport aux autres par le biais d'au moins un élément d'appui intermédiaire (88, 90).

**15.** Dispositif d'accouplement hydrodynamique selon la revendication 14, **caractérisé en ce que** l'au moins un élément d'appui intermédiaire (88, 90) est réalisé en forme d'anneau.

**16.** Dispositif d'accouplement hydrodynamique selon l'une des revendications 13 à 15, **caractérisé en ce que** l'au moins une zone d'amortisseur de vibrations torsionnelles (66) est la deuxième zone d'amortisseur de vibrations torsionnelles (66).

**17.** Dispositif d'accouplement hydrodynamique selon l'une des revendications 1 à 16, **caractérisé en ce qu'**un amortisseur de vibrations torsionnelles (116) se trouve dans le flux de couple avant le carter (12), la zone d'entrée (118) duquel est à accoupler avec un organe d'entraînement en vue de la rotation conjointe autour de l'axe de rotation (A) et la zone de sortie (120) duquel est à accoupler avec le carter (12) en vue de la rotation conjointe autour de l'axe de rotation (A).

**18.** Dispositif d'accouplement hydrodynamique selon l'une des revendications 1 à 17, **caractérisé en ce que** l'autre sous-ensemble composé de la première zone d'entrée (68) et de la première zone de sortie (72) possède, pour au moins une zone d'extrémité périphérique (920, 940) d'au moins l'une des premières unités de ressort amortisseur (76), une zone d'appui périphérique (900) dans la zone de laquelle cette première unité de ressort amortisseur (76) suit un tracé avec sa zone d'extrémité périphérique (920, 940) à distance de la surface de terminaison (860).

**19.** Dispositif d'accouplement hydrodynamique selon la revendication 18, **caractérisé en ce qu'**au moins l'une des premières unités de ressort amortisseur (76) est maintenue à distance radiale par rapport à la surface de terminaison (860) par la zone d'appui périphérique (900) ou un élément d'appui (1000) qui s'appuie contre celle-ci.

**20.** Dispositif d'accouplement hydrodynamique selon la revendication 18 ou 19, **caractérisé en ce qu'**au moins l'une des premières unités de ressort amortisseur (76) est façonnée dans sa zone d'extrémité périphérique (920, 940) de telle sorte qu'en l'absence de charge de force centrifuge, elle suit un tracé à distance de la surface de terminaison (860).

**21.** Dispositif d'accouplement hydrodynamique selon l'une des revendications 18 à 20, **caractérisé en ce qu'**au moins l'une des premières unités de ressort amortisseur (76) possède dans sa zone d'extrémité périphérique (920, 940) une dimension extérieure plus petite que dans une zone (1100) qui se trouve plus loin de la zone d'extrémité périphérique (920, 940).

**22.** Dispositif d'accouplement hydrodynamique selon la revendication 21, **caractérisé en ce qu'**un axe central longitudinal d'au moins l'une des premières unités de ressort amortisseur (76) dans la zone d'extrémité périphérique (920, 940) est décalé dans le sens radial vers l'intérieur par rapport à un axe central longitudinal dans la zone (1100) qui se trouve plus loin de la zone d'extrémité périphérique (920, 940).

23. Dispositif d'accouplement hydrodynamique selon l'une des revendications 18 à 22, **caractérisé en ce qu'**au moins l'une des premières unités de ressort amortisseur (76) dans la zone d'extrémité périphérique (920, 940) est recouverte à l'extérieur dans le sens radial par une portion de guidage (1120) fixe dans le sens radial par rapport à la zone d'extrémité périphérique (920, 940).

24. Dispositif d'accouplement hydrodynamique selon l'une des revendications 18 à 23, **caractérisé en ce que** la surface de terminaison (860) possède, dans une zone périphérique correspondant à la zone d'extrémité périphérique (920, 940) d'au moins l'une des premières unités de ressort amortisseur (76), un façonnage (1200) vers l'extérieur dans le sens radial qui est différent d'une trajectoire circulaire autour de l'axe de rotation (A) .

25. Dispositif d'accouplement hydrodynamique selon l'une des revendications 1 à 24, **caractérisé en ce que** dans au moins l'une des premières unités de ressort amortisseur (76) est disposé au moins un élément d'appui radial (1220, 1080) qui assure l'appui de celle-ci contre la déformation dans le sens radial vers l'extérieur.

26. Dispositif d'accouplement hydrodynamique selon la revendication 25, **caractérisé en ce que** l'au moins un élément d'appui radial (1220) est réalisé en forme de tige.

27. Dispositif d'accouplement hydrodynamique selon la revendication 25, **caractérisé en ce que** l'au moins un élément d'appui radial (1080) est réalisé sous la forme d'un ressort hélicoïdal.

28. Dispositif d'accouplement hydrodynamique selon l'une des revendications 1 à 27, **caractérisé en ce qu'**au moins l'une des premières unités de ressort amortisseur (76), dans un état sensiblement non sollicité, est courbée dans le sens radial vers l'intérieur à partir d'une zone d'extrémité périphérique (920, 940).

29. Dispositif d'accouplement hydrodynamique selon l'une des revendications 1 à 28, **caractérisé en ce qu'**au moins l'une des premières unités de ressort amortisseur (76) est soutenue dans le sens radial par le biais d'un élément d'appui (1140) par rapport à la surface de terminaison (860) au niveau d'au moins une zone intermédiaire entre les zones d'extrémité périphérique (920, 940) de celles-ci.

30. Dispositif d'accouplement hydrodynamique selon l'une des revendications 1 à 29, **caractérisé en ce qu'**au moins l'une des premières unités de ressort amortisseur (76) comporte une pluralité de ressorts amortisseurs (880, 1080) qui se suivent mutuellement dans la direction périphérique.

31. Dispositif d'accouplement hydrodynamique selon les revendications 29 et 30, **caractérisé en ce qu'**au moins deux ressorts amortisseurs (880, 1080) prennent appui l'un par rapport à l'autre dans la direction périphérique par le biais d'un élément d'appui (1140).

32. Dispositif d'accouplement hydrodynamique selon l'une des revendications 29 à 31, **caractérisé en ce qu'**au moins un élément d'appui (1140) peut être déplacé dans la direction périphérique par un mouvement de glissement par rapport à la surface de terminaison (860) .

33. Dispositif d'accouplement hydrodynamique selon l'une des revendications 29 à 32, **caractérisé en ce qu'**au moins un élément d'appui (1140) peut être déplacé par un mouvement de roulement dans la direction périphérique par rapport à la surface de terminaison (860) .

34. Dispositif d'accouplement hydrodynamique selon la revendication 30 ou l'une des revendications 31 à 33, dans la mesure où elle fait référence à la revendication 30, **caractérisé en ce qu'**au moins deux ressorts amortisseurs (880, 1080) prennent appui l'un par rapport à l'autre dans le sens radial vers l'extérieur et dans la direction périphérique par le biais d'un arrangement d'appui radial (1140, 1260) de forme annulaire sans contact avec la surface de terminaison (860) .

35. Dispositif d'accouplement hydrodynamique selon l'une des revendications 1 à 34, **caractérisé en ce qu'**au moins l'une des premières unités de ressort amortisseur (76) repose dans une zone centrale périphérique (980) contre la surface de terminaison (860) dans le sens radial vers l'extérieur.

36. Système de propulsion pour un véhicule, comprenant un moteur à combustion interne (142), un dispositif d'accouplement hydrodynamique (10) selon l'une ou plusieurs des revendications précédentes qui accouple le moteur à combustion interne (142) avec une boîte de vitesses (148), un arrangement différentiel (152) qui accouple la boîte de vitesses (148) avec au moins deux roues motrices (158, 160) par le biais d'arrangements d'arbre de roue motrice (154, 156) respectifs, la règle suivante s'appliquant à la rigidité globale G des arrangements d'arbre de roue motrice (154, 156) :

$$G = A \times z \ [Nm/°],$$

ou

A est un nombre dans la plage de 30 à 70, de préférence de 40 à 50,
z est le nombre de cylindres du moteur à combustion interne (142).

$$G = A \times z \ [Nm/°],$$

# Fig. 1

Stand der Technik

# Fig. 1a

Stand der Technik

860

42

34 68 76 28 12 30 23

72 64 16

56

57

14

78

84

66

82

36 32 24 38

Stand der Technik

# Fig. 2

Fig. 3

Fig. 4

Fig. 5

34

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10317634 A1
- FR 2472693 A